# EUROPEAN PATENT SPECIFICATION

(11) **EP 2 362 463 B1**
(45) Date of publication and mention of the grant of the patent: **20.11.2013**
(21) Application number: 11001466.9
(22) Date of filing: 22.02.2011
(51) Int. Cl.: H01M 2/10, H01M 2/20, H01M 10/48, H01M 10/50

(54) **Power source apparatus with electrical components disposed in the battery blocks**
Stromquellenvorrichtung mit in den Batterieblöcken angeordneten elektrischen Komponenten
Appareil de source d'alimentation avec composants électriques disposés dans les bloc-batteries

(30) Priority: 23.02.2010 JP 2010036862
(43) Date of publication of application: 31.08.2011
(73) Proprietor: Sanyo Electric Co., Ltd., Osaka 570-8677 (JP)
(72) Inventor: Asai, Yasuhiro, Moriguchi-shi Osaka 570-8677 (JP); Nishihara, Yoshitomo, Moriguchi-shi Osaka 570-8677 (JP); Ohkura, Kazumi, Moriguchi-shi Osaka 570-8677 (JP); Miyazaki, Yutaka, Moriguchi-shi Osaka 570-8677 (JP)
(74) Representative: Hertz, Oliver

(56) References cited:
- EP-A2- 2 099 085
- WO-A1-2006/068383
- WO-A1-2008/038916
- WO-A1-2011/024477

## Description

### BACKGROUND OF THE INVENTION

### 1. Field of the Invention

The present invention relates to a high-current power source apparatus primarily used as the power source for a motor that drives an automobile such as a hybrid car or electric vehicle.

### 2. Description of the Related Art

A vehicle, such as an electric vehicle that is driven by an electric motor or a hybrid car that is driven by both a motor and an engine, carries on-board a power source apparatus with battery cells housed in an outer case. To deliver motor output that can drive the vehicle, the power source apparatus has many battery cells connected in series as battery blocks that have high output voltage. By housing the battery blocks inside an outer case, the battery cells can be protected from external impact forces, and dust, dirt, and moisture prevention can be designed-in. To properly control the battery cells, a micro-controller board with various control circuits is needed to detect and monitor parameters such as voltage and battery cell temperature (detected by temperature sensors). In addition, electrical components such as fuses and shunt resistors are needed to limit charging and discharging current. To hold the micro-controller board and electrical components, an electrical component case is provided inside the outer case. As a result, an outer case that houses battery blocks and an electrical component case containing a micro-controller board and electrical components has become a generally accepted configuration.

However, when the number of battery cells in this configuration is increased, the number of battery blocks increases accordingly. Along with the increase in the number of battery cells, the number of terminals for battery cell voltage and temperature detection also increases and the micro-controller board becomes a large-scale unit. Consequently, the number of components housed in the electrical component case increases making the electrical component case over-size. As a result, this invites the problem of an over-sized outer case.

Refer to Japanese Laid-Open Patent Publication 2010-15949. Further power source techniques are described in WO 2011/024477 A1 (prior art under article 54 (3) EPC), WO 2006/068383 A1, EP 2 099 085 A2 and WO 2008/038916 A1.

The present invention was developed to resolve the type of prior-art problem described above. Thus, it is a primary objective of the present invention to provide a power source apparatus that can avoid enlarging the outer case.

This objective is solved with a power source apparatus comprising the features of claim 1. Preferred embodiments of the invention are defined in the dependent claims.

### SUMMARY OF THE INVENTION

To achieve the objective described above, the power source apparatus of the present invention is provided with battery blocks made up of a plurality of battery cells connected in battery stacks, and an outer case that holds the battery blocks. The block circuit board is disposed on a first end-plate at one end of a battery stack, and the electrical components are disposed on a second end-plate at the other end of the battery stack. With this arrangement, components needed for each battery stack can be distributed on the two end-plates avoiding protrusion from a single end-plate and achieving a balanced outline. Further, by separating heat-generating components from the block circuit board electronics, electronic component degradation due to heat generated by other electrical components can be avoided for superiority from a reliability standpoint.

In the power source apparatus for the third aspect of the present invention, a circuit board holder to retain the block circuit board, and an electrical component holder to retain the electrical components can be provided. The circuit board holder and the electrical component holder can be mounted in the end-planes of a battery stack in an orientation approximately parallel to the battery cells. With this arrangement, the height and width of the battery block remain unchanged and only the length of the battery stack is changed to retain the block circuit board and electrical components. Consequently, this power source apparatus has the positive feature of superior space utilization efficiency.

In the power source apparatus for the second aspect of the present invention, a battery stack can be configured with endplates disposed at both ends, and the battery stack can be held sandwiched between the two endplates. The block circuit board can be disposed at a first endplate at one end of the battery stack, and the electrical components can be disposed at a second endplate at the other end of the battery stack. With this arrangement, electrical components can be disposed at both endplates, which sandwich the battery stack. This allows mechanical strength to be maintained while achieving a compact outline.

In the power source apparatus for the third aspect of the present invention, the block circuit board in a battery stack can be provided with a voltage detection circuit to detect the voltage between the terminals of each battery cell. Further, flexible printed circuits can be used as the voltage detection lines for electrical connection between the voltage detection circuit and the electrode terminals of each battery cell. As a result, the labor-intensive wiring operation to connect voltage detection lines such as lead-wires to the battery stack can be eliminated. Furthermore, there is no need for a large number of lead-wires to realize the positive features of reliability and space reduction.

In the power source apparatus for the fourth aspect of the present invention, a cooled configuration can be achieved by providing a cooling plate with a coolant pipe for each battery block, and each battery stack can be disposed on a cooling plate. With this arrangement, each battery stack contacts a cooling plate allowing direct and effective cooling. In particular, components disposed at the ends of the battery stack are cooled together with the battery stack for superiority from a reliability standpoint.

In the power source apparatus for the fifth aspect of the present invention, the battery cells can be rectangular batteries or circular cylindrical batteries. As a result, the power source apparatus achieves the positive feature that battery cells can be efficiently arranged using rectangular battery cells, and each external case can be retained in a stable manner using circular cylindrical battery cells.

The above and further objects of the present invention as well as the features thereof will become more apparent from the following detailed description to be made in conjunction with the accompanying drawings.

### BRIEF DESCRIPTION OF THE DRAWINGS

Fig. 1 is a schematic drawing of a vehicle installed with a power source apparatus for the first embodiment of the present invention;
Fig. 2 is a schematic drawing of an alternate example of a vehicle installed with a power source apparatus of the present invention;
Fig. 3 is an oblique view showing the power source apparatus for the first embodiment;
Fig. 4 is an oblique view showing the cover plate removed from the outer case in Fig. 3;
Fig. 5 is an oblique view showing one of the battery block cases in Fig. 4;
Fig. 6 is an exploded oblique view of the battery block case in Fig. 5;
Fig. 7 is an oblique view of the battery block in Fig. 6;
Fig. 8 is an oblique view of the battery block in Fig. 6 viewed from the backside;
Fig. 9 is an exploded oblique view of the battery block in Fig. 7;
Fig. 10 is an exploded oblique view of the first endplate region of the battery stack in Fig. 7;
Fig. 11 is an exploded oblique view of the second endplate region of the battery stack in Fig. 8;
Fig. 12 is an exploded oblique view of the electrical component holder in Fig. 11;
Fig. 13 is a block diagram showing the battery stack of Fig. 7 cooled by coolant;
Fig. 14 is a lengthwise cross-section with one section enlarged through the line XIV-XIV in the battery block of Fig. 13;
Fig. 15 is a lateral cross-section through the line XV-XV in the battery block of Fig. 13;
Fig. 16 is an exploded oblique view of the battery block in Fig. 13;
Fig. 17 is a plan view of the cooling plate in Fig. 16;
Fig. 18 is an exploded oblique view showing another example of the cooling plate and first insulating layer;
Fig. 19 is an exploded oblique view showing another example of the cooling plate and first insulating layer;
Fig. 20 is a cross-section view showing an example of cooling pipe plumbing in the cooling plate;
Fig. 21 is an oblique view of the power source apparatus for the second embodiment;
Fig. 22 is an oblique view from below of the power source apparatus shown in Fig. 21;
Fig. 23 is an oblique view showing the internal structure of the power source apparatus shown in Fig. 21;
Fig. 24 is a horizontal cross-section view of the power source apparatus shown in Fig. 21;
Fig. 25 is an exploded oblique view of one of the battery blocks of the power source apparatus shown in Fig. 23;
Fig. 26 is an exploded oblique view showing the battery cell and separator stacking structure;
Fig. 27 is a cross-section view showing a battery block for the third embodiment; and
Fig. 28 is a block diagram showing an example of the power source apparatus used in a power storage application.

### DETAILED DESCRIPTION OF THE EMBODIMENT(S)

The following describes embodiments of the present invention based on the figures.

The car power source apparatus of the present invention is used as a power source installed on-board a vehicle such as a hybrid car or plug-in hybrid car driven by both an engine and an electric motor, or it is used as a power source installed on-board a vehicle such as an electric vehicle driven only by a motor.

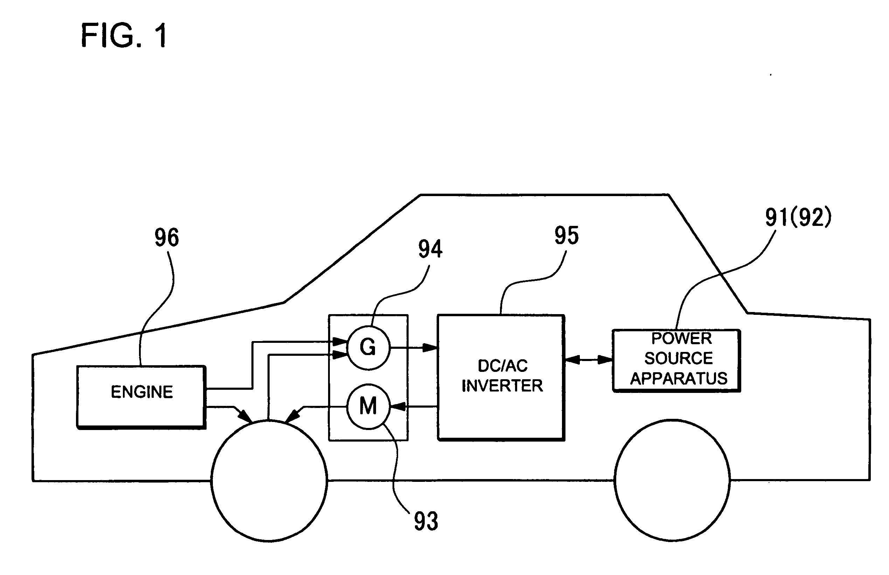

Fig. 1 shows an example of a hybrid car driven by both an engine and a motor that carries on-board a power source apparatus for the first embodiment. The hybrid car in this figure is provided with a driving motor 93 and engine 96 to drive the vehicle, a power source apparatus 91, 92 to supply power to the motor 93, and a generator 94 to charge the power source apparatus 91, 92 batteries. The power source apparatus 91, 92 is connected to the motor 93 and generator 94 via a direct current to alternating current (DC/AC) inverter 95. The hybrid car is driven by both the engine 96 and motor 93 while charging and discharging the power source apparatus 91, 92 batteries. The vehicle is driven by the motor 93 during inefficient modes of engine operation such as during acceleration and low speed operation. The motor 93 is operated by power supplied from the power source apparatus 91, 92. The generator 94 is driven by the engine 96, or by regenerative braking during brake application to charge the power source apparatus 91, 92 batteries.

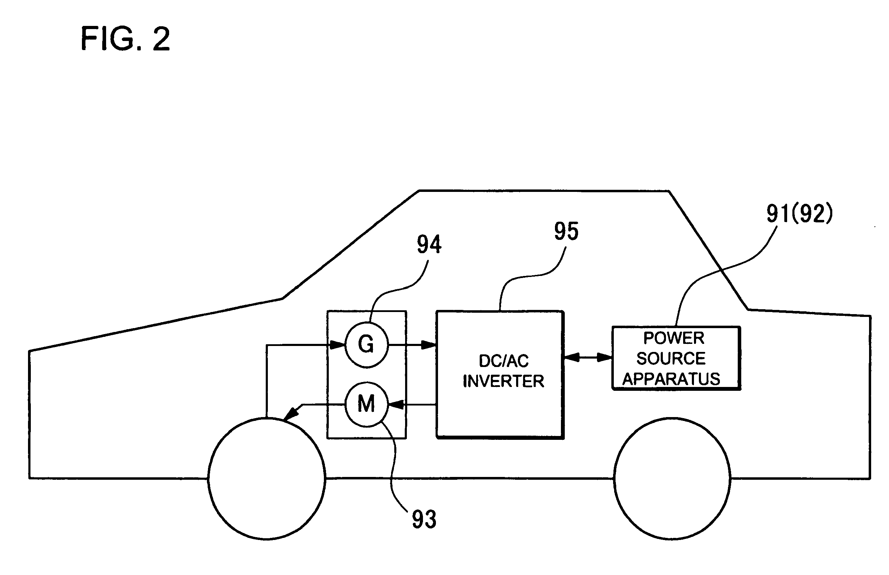

Fig. 2 shows an alternate example of an electric vehicle driven only by a motor that carries on-board a power source apparatus. The electric vehicle in this figure is provided with a driving motor 93 to drive the vehicle, a power source apparatus 91, 92 to supply power to the motor 93, and a generator 94 to charge the power source apparatus 91, 92 batteries. The motor 93 is operated by power supplied from the power source apparatus 91, 92. The generator 94 is driven by energy obtained during regenerative braking to charge the power source apparatus 91, 92 batteries.

### (First Embodiment)

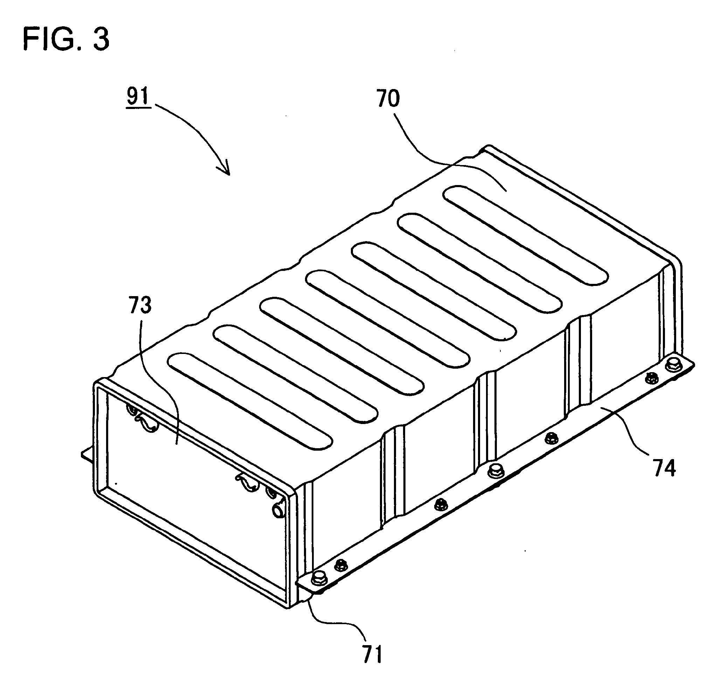

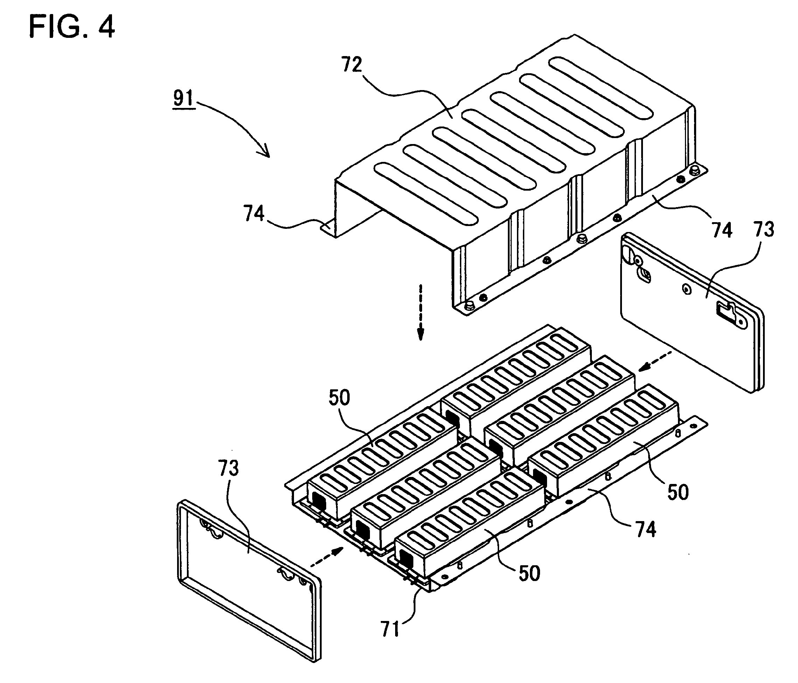

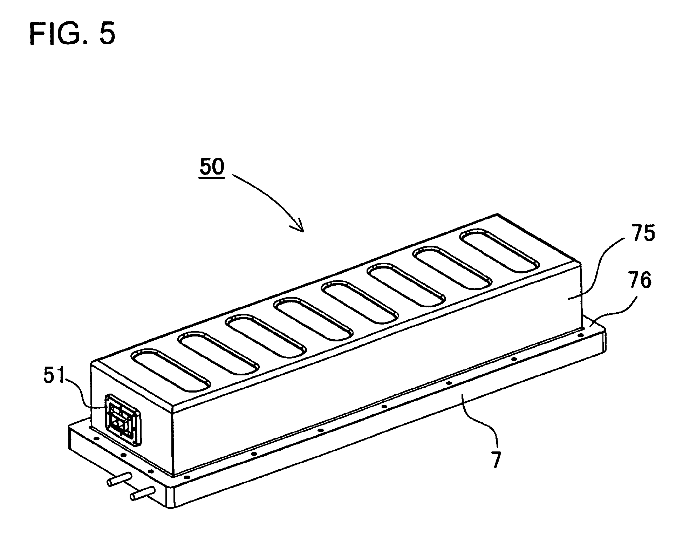

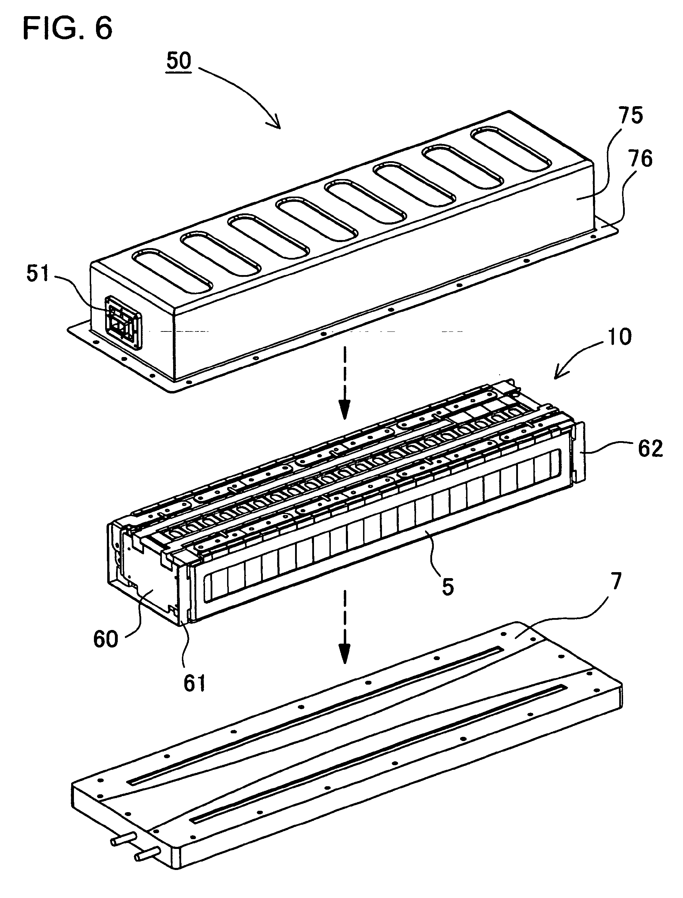

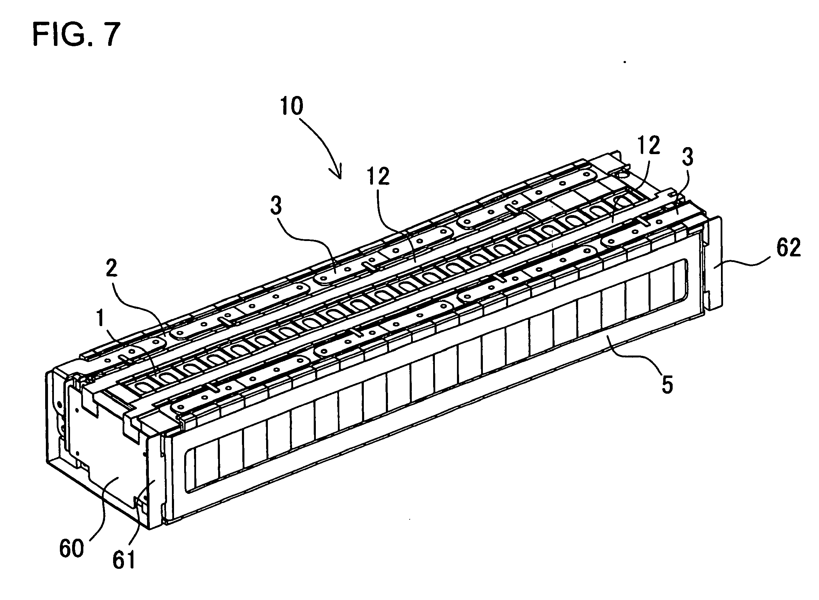

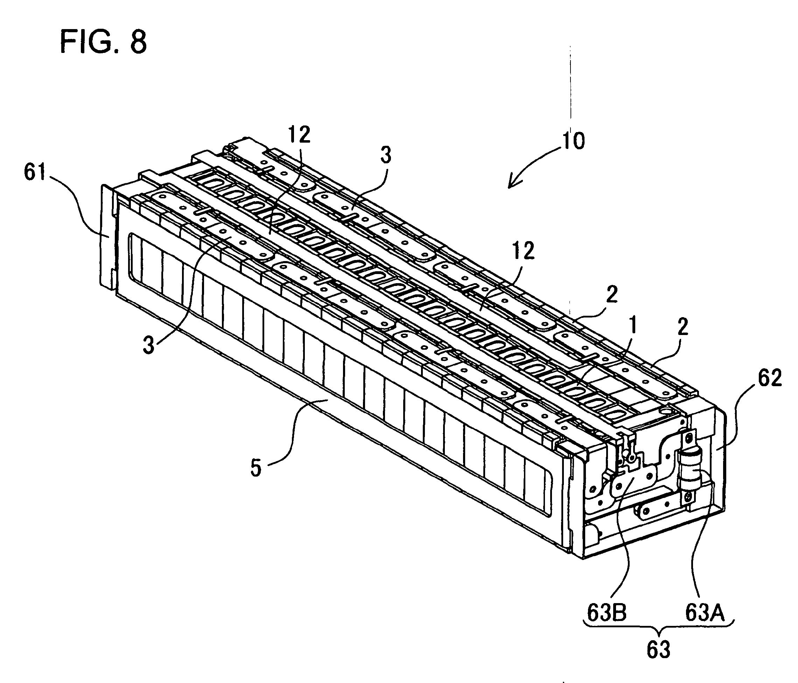

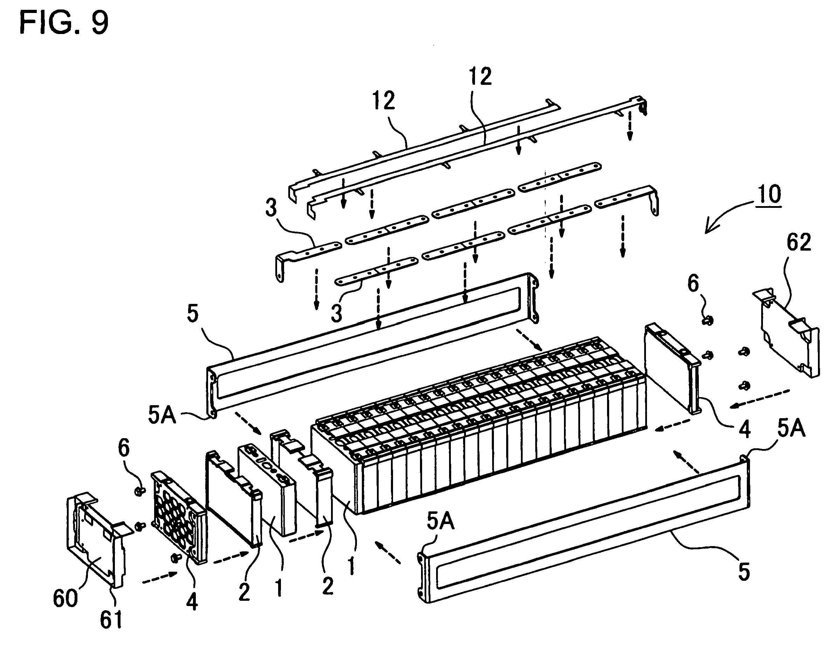

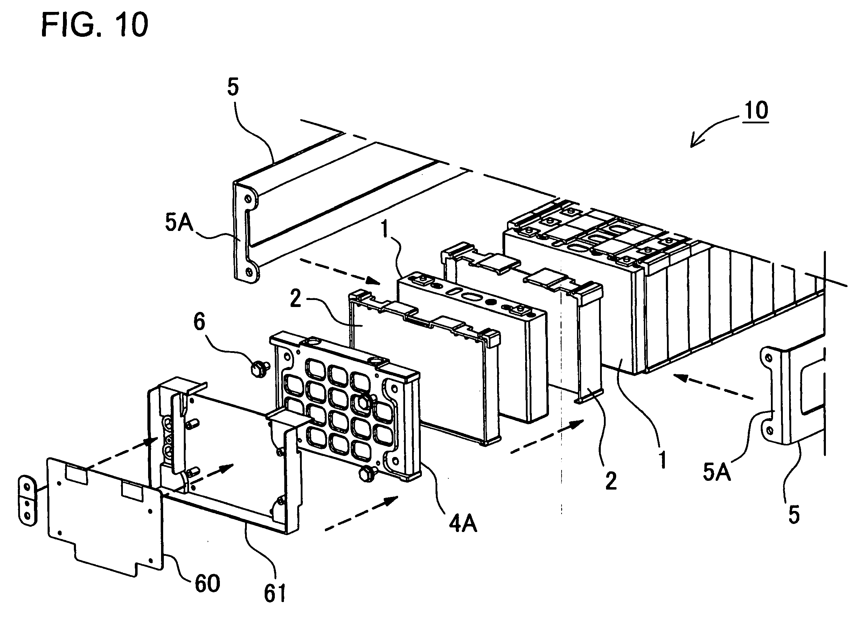

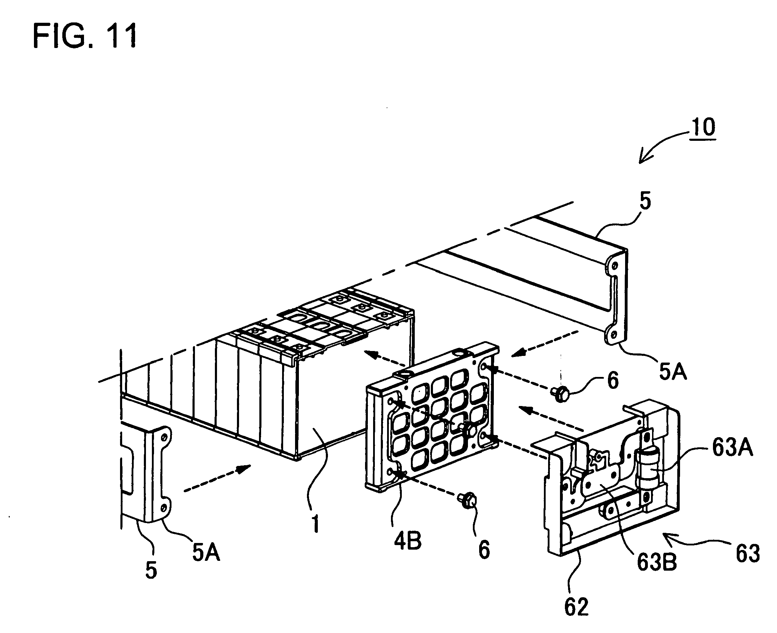

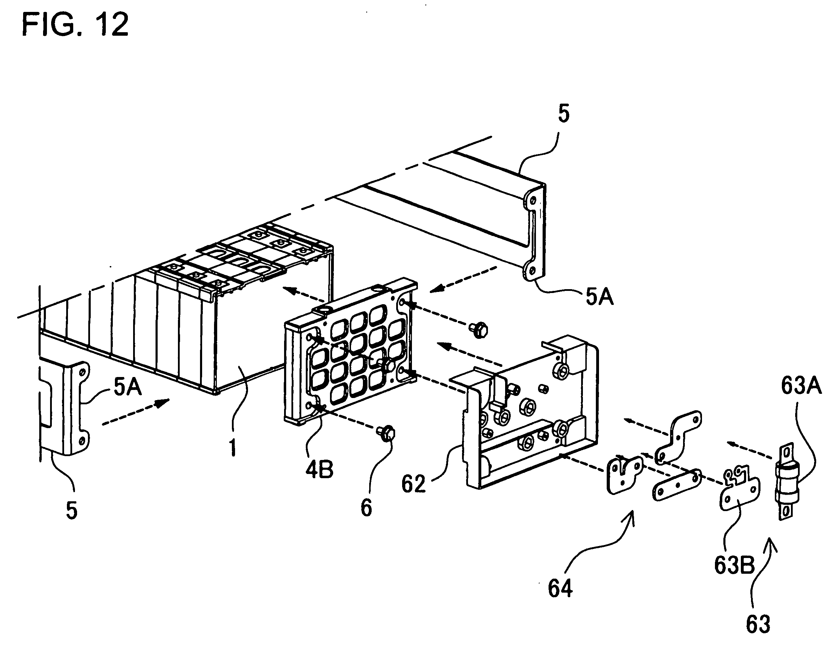

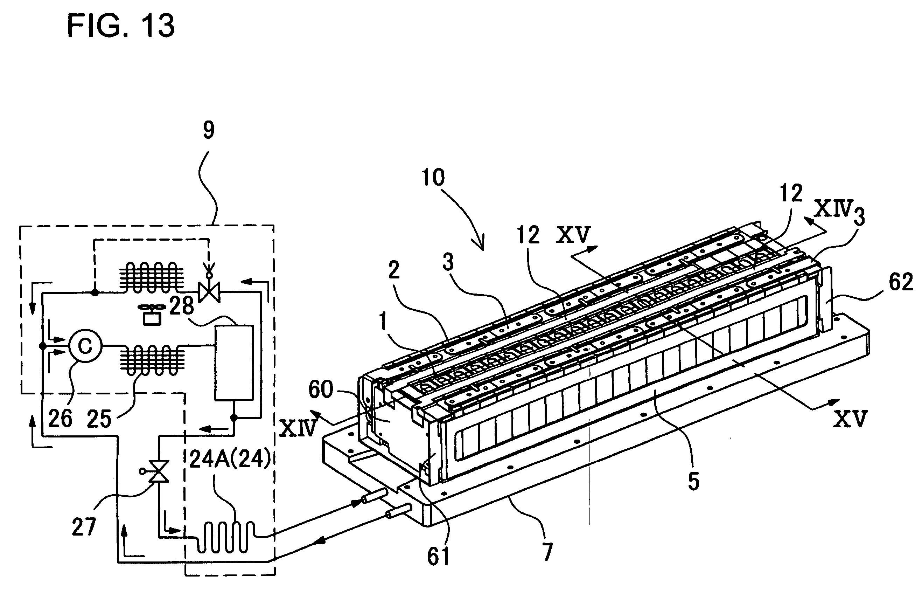

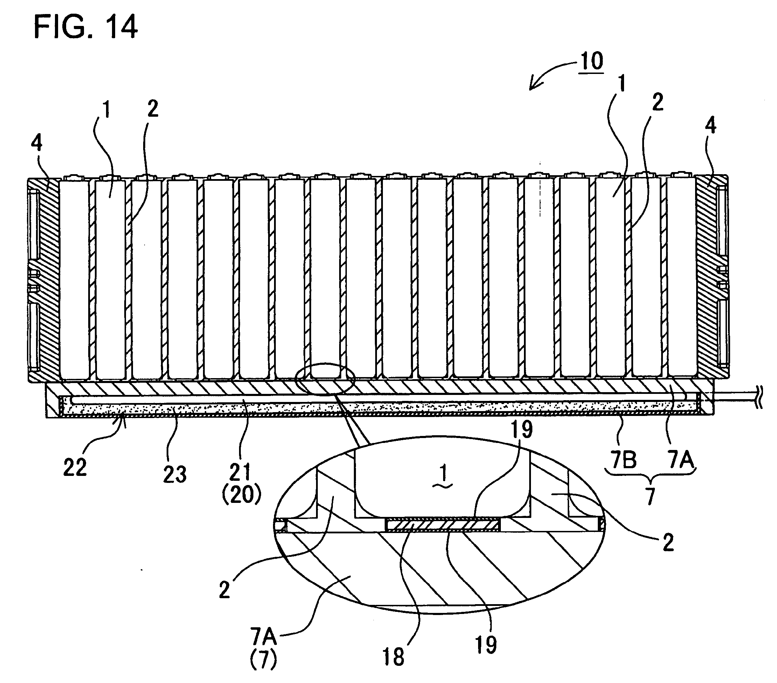

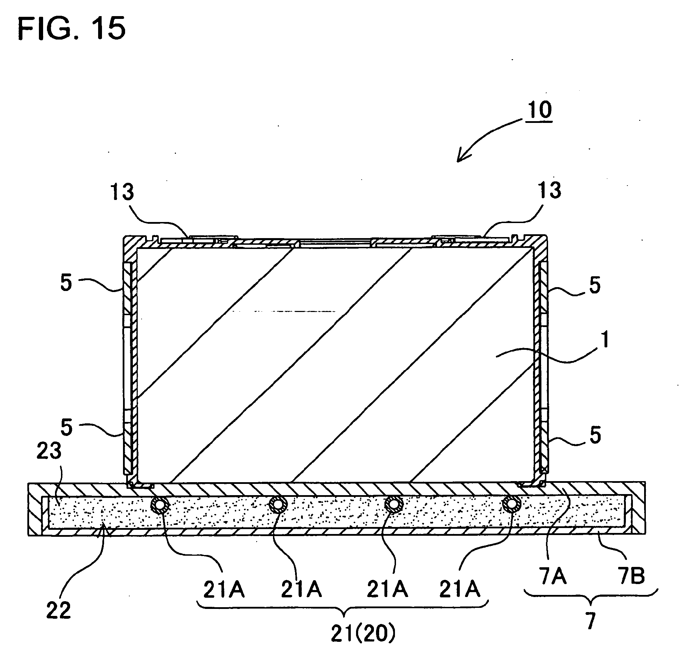

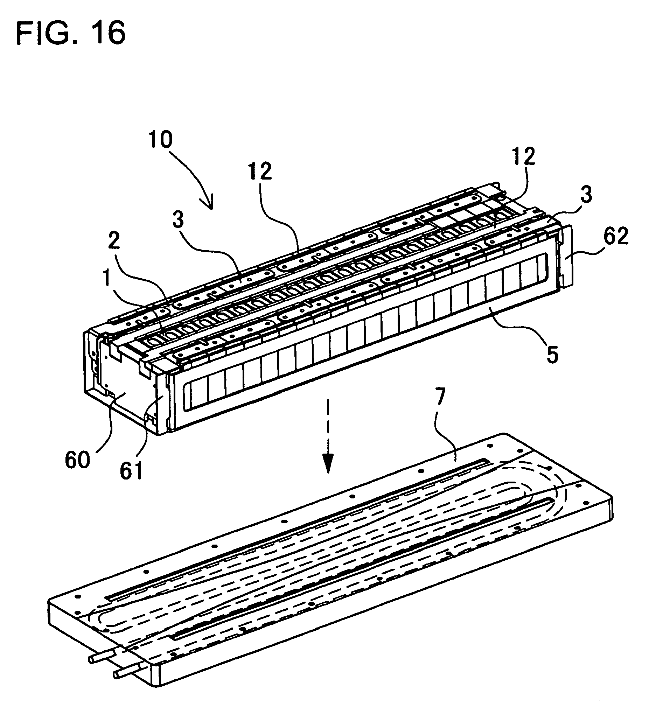

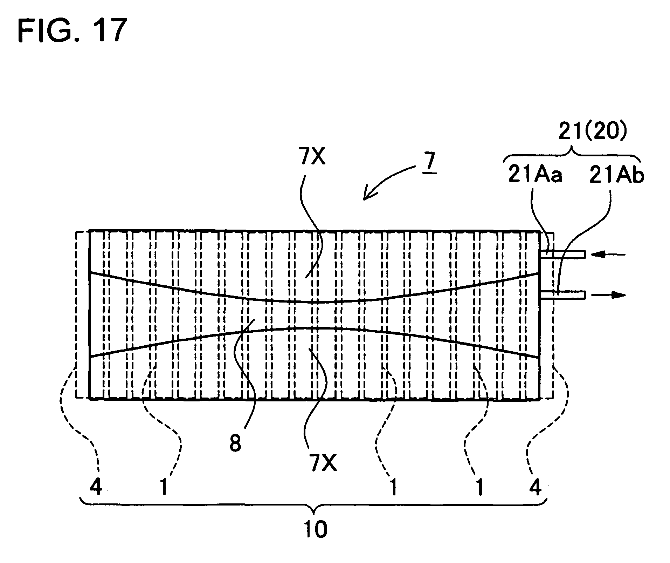

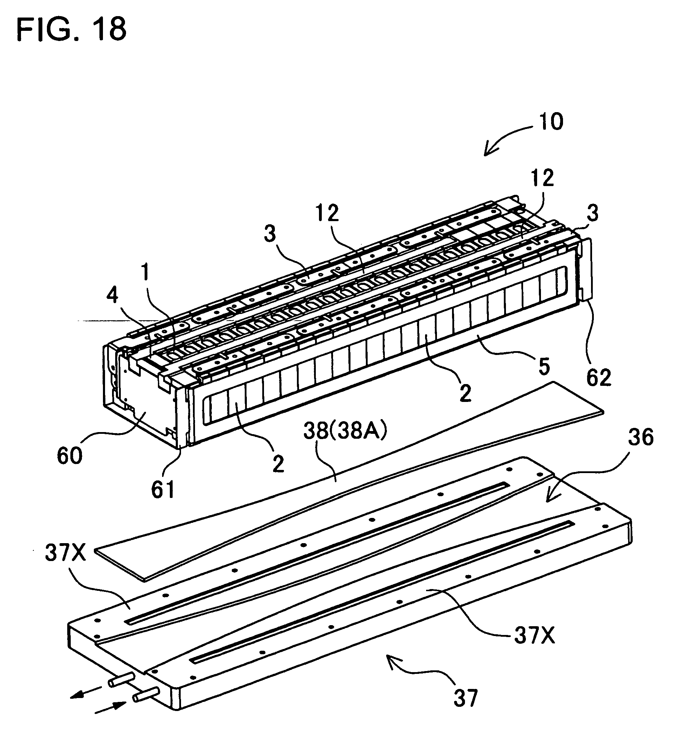

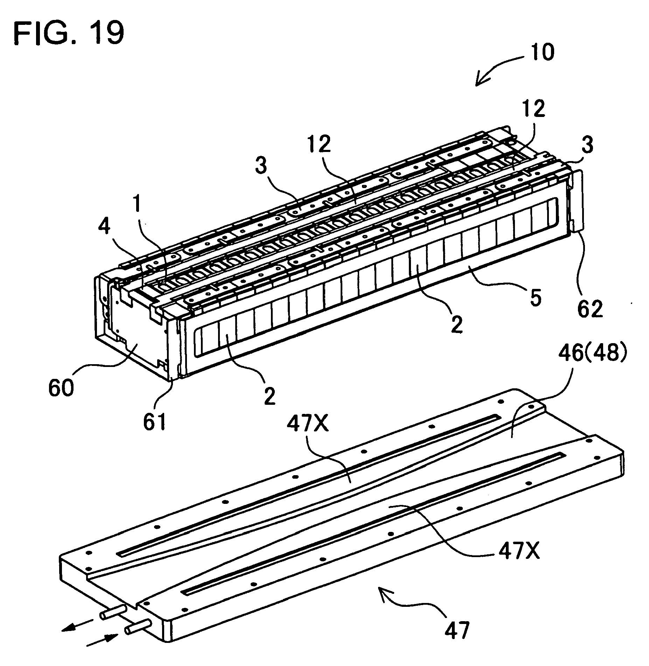

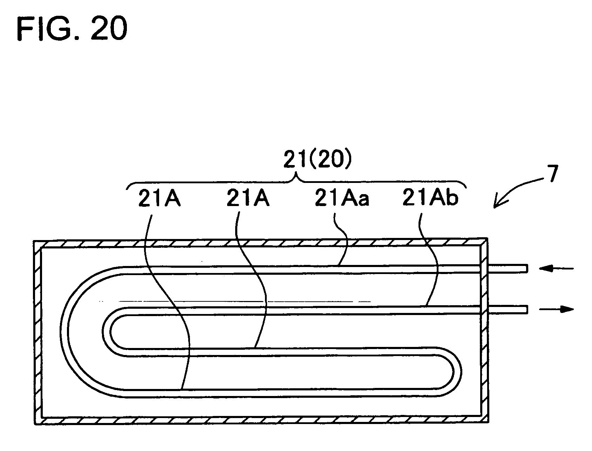

The power source apparatus 91 for the first embodiment is carried on-board the vehicles described above and is shown in detail in Figs. 3-20. Here, Fig. 3 is an oblique view of the power source apparatus 91, Fig. 4 is an oblique view showing the cover plate removed from the outer case 70 in Fig. 3, Fig. 5 is an oblique view of one of the battery block cases 75 in Fig. 4, Fig. 6 is an exploded oblique view of the battery block case 75 in Fig. 5, Fig. 7 is an oblique view of the battery block 50 in Fig. 6, Fig. 8 is an oblique view of the battery block 50 in Fig. 6 viewed from the backside, Fig. 9 is an exploded oblique view of the battery block 50 in Fig. 7, Fig. 10 is an exploded oblique view of the first endplate 4A region of the battery stack in Fig. 7, Fig. 11 is an exploded oblique view of the second endplate 4B region of the battery stack in Fig. 8, Fig. 12 is an exploded oblique view of the electrical component holder 62 in Fig. 11, Fig. 13 is a block diagram showing the battery stack of Fig. 7 cooled by coolant, Fig. 14 is a lengthwise cross-section with one section enlarged through the line XIV-XIV in the battery block 50 of Fig. 13, Fig. 15 is a lateral cross-section through the line XV-XV in the battery block 50 of Fig. 13, Fig. 16 is an exploded oblique view of the battery block 50 in Fig. 13, Fig. 17 is a plan view of the cooling plate 7 in Fig. 16, Fig. 18 is an exploded oblique view showing another example of the cooling plate 7 and first insulating layer, Fig. 19 is an exploded oblique view showing another example of the cooling plate 7 and first insulating layer, and Fig. 20 is a cross-section view showing an example of cooling pipe plumbing in the cooling plate 7.

As shown in Figs. 3 and 4, the power source apparatus 91 has a box-shaped outer case 70 that is divided into two pieces and holds a plurality of battery blocks 50 inside. The outer case 70 is provided with a lower case 71, an upper case 72, and end-panels 73 connected at both ends. The upper case 72 and the lower case 71 have outward projecting flanges 74 and the upper and lower pieces of the outer case 70 are connected with nuts and bolts at those flanges 74. In the outer case 70 of the figures, the flanges 74 are disposed on the side surfaces of the outer case 70. In the example of Fig. 4, three side-by-side rows of two lengthwise disposed battery blocks 50, for a total of six battery blocks 50, are held in the lower case 71. Each battery block 50 is mounted in the lower case 71 via set screws to hold the battery blocks 50 in fixed positions inside the outer case 70. The end-panels 73 are connected to the ends of the upper case 72 and lower case 71 to close off both ends of the outer case 70.

### (Battery Block 50)

As shown in Fig. 5, each battery block 50 has a box-shaped exterior and connectors 51 are provided at both ends. Battery blocks 50 are daisy-chained together in series connection via cables connected to the connectors 51. Or, depending on the application, parallel battery block connection is also clearly possible. Power source output obtained from the connection of a plurality of battery blocks 50 can be run outside the power source apparatus 91 through "HV-connectors" on the outer case.

As shown in the exploded oblique view of Fig. 6, the battery block 50 is made up of a box-shaped battery block case 75, a cooling plate 7 that closes off the open bottom of the battery block case 75, and a battery stack 10 housed in the space formed inside the battery block case 75 and cooling plate 7. Consequently, the battery block case 75 is made with a size that can hold the battery stack 10. The battery block case 75 has flanges 76 formed on the edges of the case opening to attach the battery block case 75 to the cooling plate 7, and the flanges 76 are connected to the perimeter of the cooling plate 7 by a fastening method such as screw-attachment. Therefore, the cooling plate 7 is formed in a flat-plate-shape that is larger around its perimeter than the battery block case 75 and essentially has an outline equivalent to the perimeter of the flanges 76. However, the battery block can also be configured to directly attach to the battery stack 10 to the cooling plate 7 without housing it in a battery block case 75. The cooling plate 7 is configured with a cooling system to cool the battery stack 10 mounted on its upper surface. In this example, the cooling plate 7 is provided with plumbing to circulate coolant inside the cooling plate 7.

### (Battery Stack 10)

As shown in the exploded oblique views of Figs. 9-12, the battery stack 10 is made by stacking a plurality of rectangular battery cells 1 and intervening separators 2. In the example of Fig. 9, twenty rectangular battery cells 1 are stacked in the battery stack 10. Each battery cell 1 is provided with a positive and negative electrode terminal on its upper surface, which is the sealing plate that closes-off the top of the battery cell 1 external case. Electrode terminals of the stacked battery cells 1 are electrically connected via bus-bars 3. Endplates 4 are disposed at both ends of the battery stack 10. The endplates 4 are connected together by binding bars 5 disposed on each side of the battery stack 10. This arrangement holds the battery stack 10 in a sandwiched manner between the pair of endplates 4. Both ends of the binding bars 5 are bent to form bent regions 5A giving the binding bars 5 an overall U-shape. Further, the parts of the endplates 4 that mate with binding bar 5 bent regions 5A are recessed. The binding bars 5 are screw-attached to the endplates 4 through screw-holes provided in the binding bar 5 bent regions 5A.

### (Endplates 4)

The endplates 4 are made up of a first endplate 4A and a second endplate 4B. The first endplate 4A and the second endplate 4B basically have a common external shape. The endplates are made of metal. A block circuit board 60 that controls the battery cells 1 that make up the battery stack 10 and electrical components 63 that control the amount of battery cell 1 current are disposed outside the endplates 4. In this example, as shown in Fig. 7, the block circuit board 60 is disposed outside the first endplate 4A, and as shown in Fig. 8, the electrical component holder 62 that holds the electrical components 63 is disposed outside the second endplate 4B.

### (Block Circuit Board 60)

As shown in Figs. 9 and 10, the block circuit board 60 is held in a circuit board holder 61 and attached to the first endplate 4A. The circuit board holder 61 has approximately the same outline as the first endplate 4A and is formed with a shape that provides space to dispose the block circuit board 60 inside perimeter walls and a backside that faces the first endplate 4A. The block circuit board 60 is protected by disposing it in the space provided in the circuit board holder 61. To tightly attach the circuit board holder 61 to the first endplate 4A, the side of the circuit board holder 61 that faces the first endplate 4A is formed with stepped regions where the heads of screws that connect the binding bars 5 to the first endplate 4A are located. In addition, connecting pieces are provided extending from the left and right of the upper surface of the circuit board holder 61 to contact the top of the first endplate 4A. The circuit board holder 61 is attached to the first endplate 4A by screw-attachment.

The block circuit board 60 monitors and controls the battery cells 1 in its battery block 50. Specifically, in the example of Fig. 9, twenty rectangular battery cells 1 are monitored and controlled by a single block circuit board 60. Further, by interconnecting battery blocks 50, data such as voltage and temperature can be exchanged between battery blocks 50 and a circuit board to administer over the entire power source apparatus can be eliminated. Said differently, the battery blocks can be made modular, and monitor, control, and protection circuitry can also be modularized along with the battery blocks. Including monitor and control functions in the battery blocks allows application-specific changes to the system, such as a change in voltage specification, to be implemented by simply changing the number of battery blocks. This achieves the positive feature that system design can be simplified. Further, since battery blocks can be replaced in a power source apparatus with a plurality of battery blocks, even if a malfunction occurs, only the problem battery block needs to be replaced. This strategy is advantageous from the perspective of maintenance and cost. Here, a circuit board that monitors and controls part of the power source apparatus is also clearly possible.

Each block circuit board 60 includes a voltage detection circuit to detect the voltage of each battery cell 1 in the battery stack 10, and a temperature detection circuit to detect battery cell temperature. By monitoring battery cell voltage and temperature, these circuits make up protection circuitry that protects the battery cells 1 from over-charging and over-discharging.

### (Flexible Printed Circuits 12)

The battery stack 10 is provided with voltage and temperature sensors to detect the temperature and potential difference at each battery cell 1. Accordingly, the outputs of the voltage and temperature sensors are connected to the block circuit board 60. As shown in Fig. 9, flexible printed circuits 12 are used as voltage detection lines to electrically connect the electrode terminals of each battery cell 1 with the block circuit board 60 voltage detection circuit. Flexible printed circuits 12 are made from flexible materials, and the wires of the flexible printed circuits 12 electrically connect the positive and negative electrode terminals of each battery cell 1 with the voltage detection circuit. Since a common flexible printed circuit can connect the positive or negative electrode terminals of a plurality of battery cells 1 with the voltage detection circuit, labor-intensive lead-wire connection is unnecessary and complex voltage detection wiring is simplified. In the present embodiment, although the electrode terminals of each battery cell are connected to the block circuit board voltage detection circuit with flexible printed circuit voltage detection lines, standard wiring can also be used.

### (Electrical Component Holder 62)

As shown in Figs. 11 and 12, the electrical component holder 62 is attached to the outer surface of the second endplate 4B. The electrical component holder 62 has approximately the same shape as the circuit board holder 61, and establishes space surrounded by perimeter walls to dispose electrical components 63 that control the amount of battery stack 10 current. The electrical components 63 can be electric circuit elements connected to the battery stack 10 such as a fuse 63A and shunt resistor 63B. In addition, contactor relays that make and break electrical connection to the battery stack 10 and a current sensor connected to the block circuit board 60 can also be included to eliminate any need for an electrical component case, which is required in a prior-art power source apparatus. These types of electrical circuit elements are connected by lead-plates 64. Further, the electrical component holder 62 is provided with screw-holes for attaching parts such as the lead-plates 64 in the space established to hold the electrical components 63. In this respect, the electrical component holder 62 has a different configuration than the circuit board holder 61. However, the electrical component holder and the circuit board holder can also be made in a common configuration that can serve to hold the block circuit board or dispose electrical components.

As described above, the battery stack 10 has a block circuit board 60 disposed at one end and electrical components 63 disposed at the other end. By separating parts in this manner, placement of heat-generating components, such as the fuse 63A and shunt resistor 63B, next to electronic components can be avoided. This is desirable from the aspect of protecting electronic components from detrimental thermal effects.

In this manner, by disposing protection circuitry that monitors the battery block 50 as well as electrical components 63 within the battery block 50 itself, a separate electrical component case is not required to house those parts. Consequently, space inside the power source apparatus 91 outer case can be reduced. In particular, by disposing the block circuit board 60 and electrical components 63 at the ends of the battery block 50, they can be oriented parallel to the battery cells 1 without changing the height and width of the battery block 50. On the other hand, the overall length of the battery stack 10 is increased somewhat. Since battery stack 10 voltage and capacity is adjusted by the number of stacked battery cells 1, there is comparatively more flexibility for change in the lengthwise direction. In particular, for a direct cooling configuration with the battery stacks 10 disposed on top of cooling plates 7, there is no need to provide gaps between the battery cells to pass cooling air and no need to dispose cooling ducts around the battery stacks 10 to intake and exhaust cooling air. This contributes to reducing the size of both the battery stacks 10 and the battery blocks 50. Further, by orienting the circuit board holder 61 and the electrical component holder 62 perpendicular to the cooling plate 7 in the same manner as the battery cells 1, components held in those holders are also cooled. Since heat-generation from those elements is suppressed, the system also achieves the positive feature of improved reliability.

As shown in Figs. 13-16, the power source apparatus 91 is provided with battery stacks 10 that are stacks of a plurality of rectangular battery cells 1, cooling plates 7 disposed in thermal contact with the battery cells 1 that make up the battery stacks 10, and a cooling system 9 that cools the cooling plates 7.

A battery stack 10 has separators 2 intervening between the stacked battery cells 1. The battery stack 10 has battery cells 1 with external cases that are metal, and the battery cells 1 are stacked in an insulated manner via plastic separators 2. A separator 2 has a shape that can fit battery cells 2 in both sides, and separators 2 can be stacked in a manner that prevents position shift in adjacent battery cells 1. Here, battery cell external cases can also be an insulating material such as plastic, and a battery stack can be formed by stacking battery cells without intervening separators.

The rectangular battery cells 1 are lithium ion batteries. However, the battery cells can be any rechargeable batteries, such as nickel hydride batteries or nickel cadmium batteries. As shown in the figures, a battery cell 1 has a rectangular shape of given thickness, is provided with positive and negative electrode terminals 13 that protrude from the ends of the upper surface, and is provided with a safety valve opening 14 at the center of the upper surface. Adjacent positive and negative electrode terminals 13 of the stacked battery cells 1 are connected together via bus-bars 3 for series connection. A high output voltage power source apparatus can be obtained by series connecting adjacent battery cells 1. However, the power source apparatus can also be connected with adjacent battery cells in parallel.

A battery stack 10 is provided with endplates 4 at both ends, and the pair of endplates 4 are connected together by binding bars 5 to retain the stacked battery cells 1. The endplates 4 have approximately the same rectangular outline as the battery cells 1. As shown in Figs. 9-11, the binding bars 5 have both ends bent inward to form bent regions 5A that are attached to the endplates 4 via set-screws 6.

Endplates 4 are reinforced by reinforcing ribs (not illustrated) formed in single-piece construction on the outer surfaces of the endplates 4. Connecting holes are also established in the outer surfaces of the endplates 4 to connect the binding bar 5 bent regions 5A. The endplates 4 in Figs. 9-12 are provided with connecting holes in each of the four corners. The connecting holes are female screw-holes. Set-screws 6 can be passed through the binding bars 5 and screwed into the connecting holes to attach the binding bars 5 to the endplates 4.

To cool the battery cells 1, a cooling plate 7 is attached in a manner thermally connected to the bottom surface of each battery cell 1 in a battery stack 10. In a power source apparatus with adjacent battery cells 1 connected in series, there is a potential difference between adjacent battery cells 1. Consequently, if the battery cells 1 are electrically connected to a cooling plate 7, short circuit will result and high short circuit current will flow. As shown in the enlarged inset of Fig. 14, short circuits are prevented by establishing an electrically insulating layer 18 between the cooling plate 7 and the battery stack 10. The electrically insulating layer 18 electrically insulates the battery cells 1 from the cooling plate 7 while efficiently transferring heat between the battery cells 1 and the cooling plate 7. Accordingly, the electrically insulating layer 18 is material with superior electrical insulating properties and thermal conductivity characteristics for efficient heat transfer between the battery cells 1 and the cooling plate 7. For example, silicon resin sheet, plastic sheet filled with high thermal conductivity filler, or mica can be used as the electrically insulating layer 18. Further, a thermal transfer compound 19 such as silicone oil can be applied between the electrically insulating layer 18 and the battery cells 1 and between the electrically insulating layer 18 and the cooling plate 7 for a more efficient thermally conductive configuration.

The cooling plate 7 does not cool all the battery cells 1 equally. This serves to regulate the thermal energy absorbed from the battery cells 1 and reduce temperature differences between battery cells 1. To reduce battery cell temperature differences, the cooling plate 7 efficiently cools high temperature battery cells such as those in the central region, and reduces cooling of low temperature battery cells such as those in the end regions. To achieve this, a first insulating layer 8 is provided between the battery cells 1 and the cooling plate 7 to limit heat transfer from the battery cells 1 to the cooling plate 7. The battery cell 1 contacting surface area of the first insulating layer 8 varies according to battery cell 1 position in the stacking direction. This difference in first insulating layer 8 battery cell 1 contacting area controls thermal energy transferred from the battery cells 1 to the cooling plate 7 to reduce battery cell 1 temperature differences.

In the power source apparatus of Figs. 16 and 17, the battery cell 1 contacting area of the first insulating layer 8 disposed between the battery cells 1 and the cooling plate 7 varies according to battery cell 1 position in the stacking direction. Thermal energy transferred from the battery cells 1 to the cooling plate 7 is controlled by the differences in first insulating layer 8 battery cell contacting area to reduce battery cell 1 temperature differences. The cooling plate 7 of Figs. 16 and 17 is provided with a first insulating layer 8 that extends lengthwise in the battery cell 1 stacking direction, and the lateral width of that first insulating layer 8 varies along the stacking direction. Accordingly, the area of the cooling surface 7X, where battery cells 1 contact the cooling plate 7, varies along the stacking direction.

The surface of the cooling plate 7 opposite the battery stack 10 is provided with plastic sheet or an applied thermally insulating film as the first insulating layer 8. Compared with metal, the thermal conductivity of plastic sheet or an applied thermally insulating film is low, and such layers thermally insulate the cooling plate 7 from the battery cells 1. The cooling plate 37 shown in Fig. 18 is provided with a recessed area 36 in the surface opposite the battery stack 10. The shape of the interior of the recessed area 36 is made equivalent to, or slightly larger than the outline of the first insulating layer 38, and the depth of the recessed area 36 is made equal to the thickness of the first insulating layer 38. The first insulating layer 38 of the cooling plate 37 is established by filling the recessed area 36 with thermal insulating material 38A. The cooling surface 37X that contacts the battery cells 1 and the first insulating layer 38 can both be put in tight contact with the bottom surfaces of the battery cells 1. This is because the surfaces of the cooling surface 37X and the first insulating layer 38 are in the same plane and contact the opposing surface of the battery stack 10 in a planar fashion.

As shown in Fig. 19, a non-contacting recessed area 46 that does not make contact with the battery cells 1 can also be the first insulating layer 48 in the cooling plate 47 surface opposite the battery stack 10. A non-contacting recessed area 46 that does not touch the battery cells 1 conducts little heat and acts as a thermally insulating layer that transfers less thermal energy than the cooling surface 47X that contacts the battery cells 1. Consequently, the non-contacting recessed area 46 serves as the first insulating layer 48 to limit the transfer of thermal energy from the battery cells 1. In this cooling plate 47, the cooling surface 47X contacts and cools the battery cells 1, and the non-contacting recessed area 46, which is the first insulating layer 48, limits thermal energy transfer from the battery cells 1. A cooling plate 47 with this structure can reduce the transfer of thermal energy from the battery cells 1 to the cooling plate 47 by making the non-contacting recessed area 46 deeper.

The shape of the first insulating layer 8, 38, 48 that extends lengthwise in the battery cell 1 stacking direction is determined by the battery cell 1 temperature distribution. Specifically, the surface area of each battery cell 1 that contacts the cooling plate 7, 37, 47 through the first insulating layer 8, 38, 48 is set by the battery cell 1 temperature distribution. Battery cells 1 that become a high temperature without a first insulating layer 8, 38, 48 are made to have a small contact area with the first insulating layer 8, 38, 48. Conversely, battery cells 1 that become a lower temperature without a first insulating layer 8, 38, 48 are made to have a larger contact area with the first insulating layer 8, 38, 48. In the power source apparatus of Figs. 16-19, to prevent battery cells 1 stacked in the central region from becoming a higher temperature than those in the end regions, the lateral width of the first insulating layer 8, 38, 48 is narrowed at the central region and widened at the end regions. The cooling plate 7, 37, 47 of this power source apparatus can cool battery cells 1 in the central region more efficiently than those in the end regions to reduce temperature rise in the centrally located battery cells 1. Consequently, battery cells 1 that would become hot are reduced in temperature allowing temperature differences between the battery cells 1 to be reduced. Since the first insulating layer 8, 38, 48 can control the transfer of thermal energy from the battery cells 1 to the cooling plate 7, 37, 47 to reduce battery cell 1 temperature differences, it is designed to an optimal shape considering the battery cell 1 temperature distribution.

Although not illustrated, the power source apparatus can have cooling gaps provided between adjacent battery cells, and the battery cells can be additionally cooled by forced ventilation of cooling gas through the cooling gaps. In that case, the upstream side of the battery stacks becomes a lower temperature and the downstream side becomes a higher temperature. Accordingly, battery cell contacting area of the first insulating layer on the cooling plate is made larger for the upstream battery cells, and battery cell contacting area of the first insulating layer is made smaller for the downstream battery cells. This reduces temperature differences between upstream and downstream battery cells.

In a power source apparatus, which has cooling gaps provided between adjacent battery cells with battery cells cooled by forced ventilation of cooling gas through the cooling gaps, and has rows of two battery stacks disposed upstream and downstream in the cooling gas flow, the upstream battery stacks become a lower temperature and downstream battery stacks become a higher temperature. Accordingly, battery cell contacting area of the first insulating layer provided on the cooling plate in thermal contact with an upstream battery stack is made larger, and the battery cell contacting area of the first insulating layer provided on the cooling plate in thermal contact with a downstream battery stack is made smaller. This reduces temperature differences between upstream and downstream battery stacks and specifically reduces temperature differences between the battery cells that make up the battery stacks.

A cooling plate 7, 37, 47 that cools the battery cells 1 is provided with coolant plumbing 20 to pass coolant fluid. Coolant fluid to cool the cooling plate 7, 37, 47 is supplied to the coolant plumbing 20 from the cooling system 9. The cooling plate 7, 37, 47 can be efficiently cooled with coolant supplied from the cooling system 9 as a liquid that is vaporized inside the coolant plumbing 20 to cool the cooling plate 7, 37, 47 via the heat of vaporization.

Figs. 14 and 15 are cross-section views of the cooling plate 7. The cooling plate 7 has an upper plate 7A and a bottom plate 7B joined around the perimeter to form an enclosure 22. The enclosure 22 contains coolant plumbing 20 that is a coolant pipe 21 such as copper or aluminum pipe serving as a heat exchanger to circulate liquefied coolant fluid. The coolant pipe 21 is attached in close contact with the upper plate 7A of the cooling plate 7 to cool the upper plate 7A, and thermal insulation 23 is disposed between the coolant pipe 21 and the bottom plate 7B to insulate the bottom plate 7B.

Coolant is supplied to the cooling plate 7 coolant pipe 21 in liquid form and vaporizes inside the coolant pipe 21 to cool the upper plate 7A via the heat of vaporization. The coolant pipe 21 shown in Figs. 16 and 20 is plumbed inside the cooling plate 7 to form four rows of parallel pipes 21 A from a single continuous pipe. The outlet-side parallel pipe 21Ab is plumbed in close proximity to the inlet-side parallel pipe 21Aa. In the cooling plate 7 of these figures, the coolant pipe 21 is a continuous pipe that forms four rows of parallel pipes 21A. However, continuous piping that forms less than four rows of parallel pipes or more than four rows of parallel pipes can also be implemented.

In the cooling plate 7 of the figures, coolant supplied to the inlet-side parallel pipe 21Aa is discharged from the outlet-side parallel pipe 21Ab. Since the inlet-side parallel pipe 21Aa is supplied with liquefied coolant, a sufficient amount of coolant is supplied and that region is sufficiently cooled by vaporization of the coolant. In contrast, coolant that has been vaporizing inside the coolant pipe 21 is delivered to the outlet-side parallel pipe 21Ab, and much of the coolant can be vaporized leaving only a small amount of liquefied coolant.

In particular, compared to a flow control type of expansion valve that adjusts valve opening by detecting the temperature at the outlet-side of the coolant pipe, a capillary tube 24A type of expansion valve 24 can supply an approximately constant coolant mass flow rate to the coolant pipe 21 regardless of the cooling plate 7 temperature. In this type of system, when the cooling plate 7 becomes significantly high in temperature, coolant can be vaporized along the way to the outlet-side parallel pipe 21Ab and the amount of liquid coolant at the outlet-side can become small. In this situation, the amount of coolant that can be vaporized inside the outlet-side parallel pipe 21Ab is small and thermal energy for cooling the outlet-side parallel pipe 21Ab is reduced. This is because heat used to vaporize of the coolant is the thermal energy available for cooling. However, in a cooling plate 7 with the inlet-side parallel pipe 21Aa plumbed in close proximity to the outlet-side parallel pipe 21Ab, a large amount of thermal energy is available for cooling the inlet-side parallel pipe 21Aa. Consequently, even if little thermal energy is available for cooling the outlet-side parallel pipe 21Ab, the thermal energy available for cooling the inlet-side parallel pipe 21Ab is enough to cool both parallel pipes.

The coolant pipe 21 is connected to the cooling system 9 that cools the cooling plate 7 through a throttle valve 27. The cooling system 9 of Fig. 13 is provided with a compressor 26 that compresses vapor-state coolant discharged from the cooling plate 7, a condenser 25 that cools and liquefies coolant compressed by the compressor 26, a receiver tank 28 that stores coolant liquefied by the condenser 25, and an expansion valve 24 that is a capillary tube 24A or a flow control valve to supply receiver tank 28 coolant to the cooling plate 7. In this cooling system 9, coolant supplied from the expansion valve 24 vaporizes inside the cooling plate 7 to cool the cooling plate 7 by the heat of vaporization of the coolant.

The expansion valve 24 of Fig. 13 is a capillary tube 24A, which is a small-diameter pipe that restricts coolant flow to limit the amount of coolant supplied to the coolant pipe 21 and cause adiabatic expansion of the coolant. The capillary tube 24A expansion valve 24 limits the supplied coolant to an amount that can be completely vaporized in the cooling plate 7 coolant pipe 7 and discharged in a gaseous-state. The condenser 25 cools and liquefies coolant supplied from the compressor 26 in the gaseous-state. Since the condenser 25 radiates heat from the coolant for liquification, it is disposed in front of a radiator installed in the vehicle. The compressor 26 is driven by the vehicle engine or by a motor to pressurize gaseous-state coolant discharged from the coolant pipe 21 and supply it to the condenser 25. In this cooling system 9, coolant compressed by the compressor 26 is liquefied by the condenser 25 and the liquefied coolant is stored in the receiver tank 28. Coolant stored in the receiver tank 28 is supplied to the cooling plate 7, and is vaporized inside the cooling plate 7 coolant pipe 21 to cool the upper plate 7A of the cooling plate 7 via the heat of vaporization.

The compressor, condenser, and receiver tank of an air conditioner installed in the vehicle can be used jointly as the cooling system of the power source apparatus described above. In this configuration, battery stacks in the power source apparatus installed in the vehicle can be efficiently cooled without providing a cooling system specially designed for battery stack cooling. In particular, the thermal energy required for battery stack cooling is extremely small compared to the thermal energy required to air condition the vehicle. Therefore, even if the vehicle air conditioning system is used for the dual purpose of battery stack cooling, the battery stacks can be effectively cooled essentially without reducing the performance of the vehicle air conditioner.

In the cooling system 9 described above, the state of cooling plate 7 cooling is controlled by opening and closing the throttle valve 27. The cooling system 9 is provided with a battery temperature sensor (not illustrated) to detect the temperature of the battery stack 10, and a cooling plate temperature sensor (not illustrated) to detect the temperature of the cooling plate 7. The throttle valve 27 can be controlled according to the temperatures detected by those temperature sensors to control the state of cooling. When the throttle valve 27 is opened, receiver tank 28 coolant is supplied to the cooling plate 7 through the expansion valve 24. Coolant supplied to the cooling plate 7 is vaporized inside to cool the cooling plate 7 via the heat of vaporization. Coolant that has cooled the cooling plate 7 is introduced into the compressor 26 and circulated from the condenser 25 into the receiver tank 28. When the throttle valve 27 is closed, coolant is not circulated through the cooling plate 7 and no cooling plate 7 cooling takes place.

The power source apparatus described above cools the battery cells 1 via cooling plates 7, 37, 47. However, separators disposed between the battery cells of this power source apparatus can provide cooling gaps along the battery cell surfaces, cooling gas can be forcibly ventilated through those cooling gaps, and the battery cells can be cooled by both the cooling plates and the cooling gas.

### (Second Embodiment)

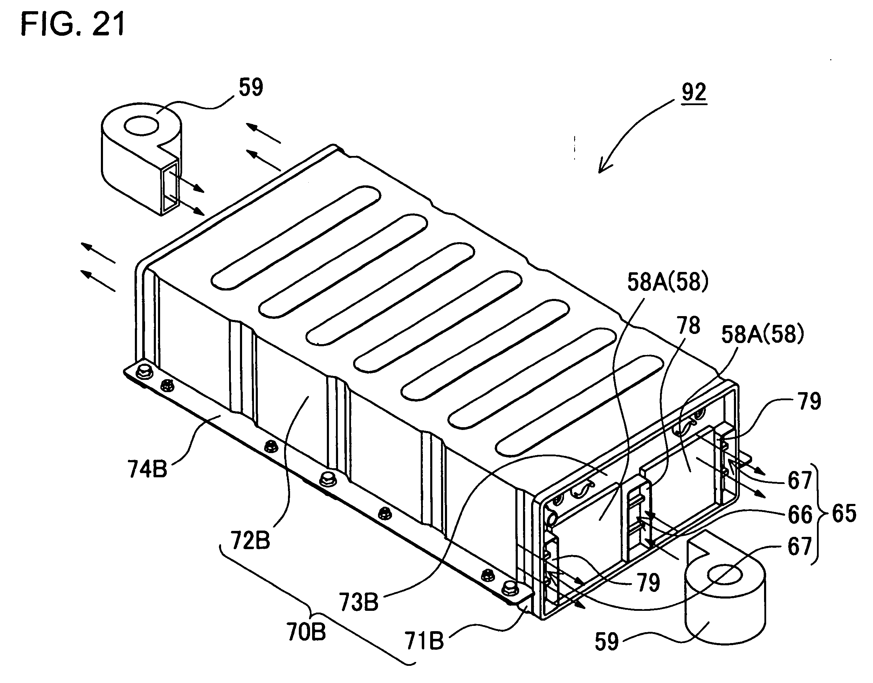

As shown in Figs. 21-25, the power source apparatus 92 for the second embodiment is provided with battery stacks 10B having a plurality of rectangular battery cells 1 stacked with cooling gaps 53, forced ventilating equipment 59 to force ventilation through the battery stack 10B cooling gaps 53, and an outer case 70B to hold the battery stacks 10B. The outer case 70B is made up of an upper case 72B and a lower case 71 B, and flanges 74B are provided on the upper and lower cases.

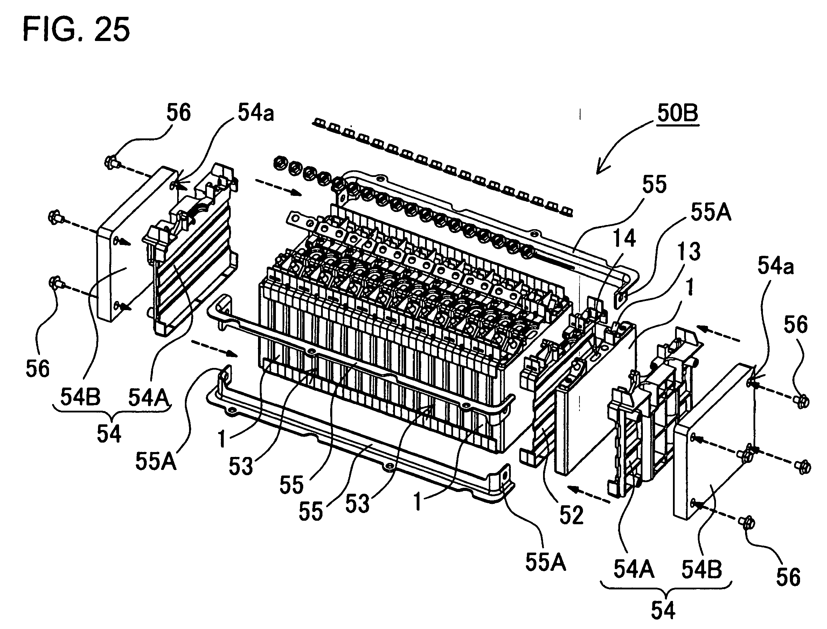

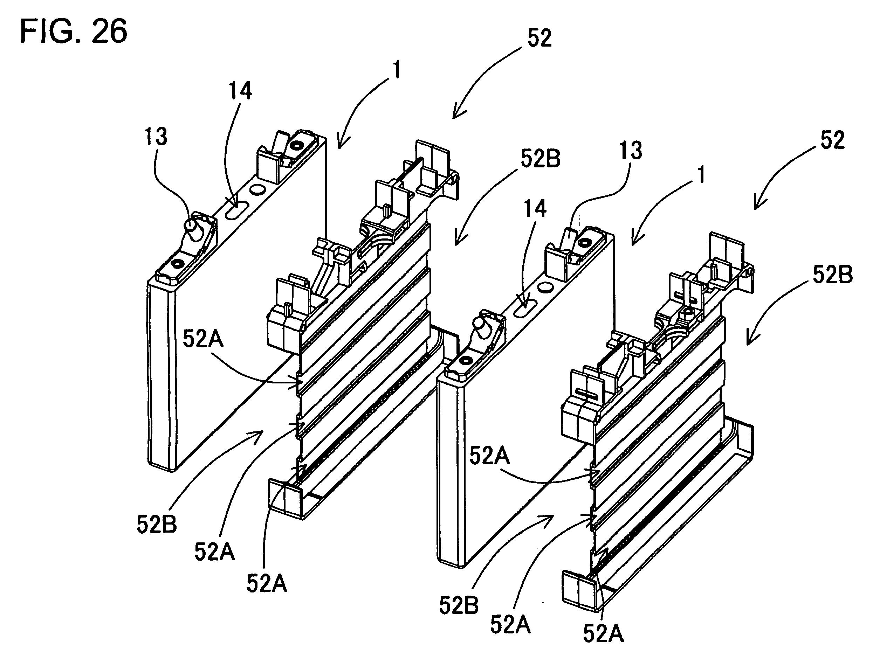

A battery stack 10B has separators 52 intervening between the stacked battery cells 1. The separators 52 are made in a shape that forms cooling gaps 53 between the battery cells 1. The separators 52 of Figs. 25 and 26 have a structure that fits together with, and joins battery cells 1 on both sides. Adjacent battery cells 1 can be stacked in a manner preventing position shift via separators 52 that fit together with the battery cells 1.

Separators 52 are made of insulating material such as plastic, and insulate adjacent battery cells 1. As shown in Fig. 26, separators 52 are provided with cooling gaps 53 to pass cooling gas such as air between the separators 52 and battery cells 1 to cool the battery cells 1. The separators 52 of the figures are provided with grooves 52A that extend to both side edges of the surfaces opposite the battery cells 1 to establish cooling gaps 53 between the battery cells 1 and the separators 52. The separators 52 of the figures are provided with a plurality of parallel grooves 52A separated by a given interval. The separators 52 of the figures have grooves 52A provided on both sides to establish cooling gaps 53 between the separators 52 and adjacent battery cells 1 on both sides. This structure has the characteristic that battery cells 1 on both sides of a separator 52 can be cooled effectively. However, separators can also be configured with grooves provided on only one side to establish cooling gaps between the separators and battery cells. The cooling gaps 53 of the figures are established in a horizontal orientation with openings on the left and right sides of a battery stack 10B. In addition, the separators 52 of the figures are provided with cut-outs 52B on both sides. The cut-outs 52B in these separators 52 create a wide gap between opposing surfaces of adjacent battery cells 1 allowing resistance to the cooling gas flow to be reduced. This allows cooling gas to flow smoothly from the cut-outs 52B into the cooling gaps 53 between the separators 52 and the battery cells 1 for effective battery cell 1 cooling. In this manner, cooling gas such as air, which is forcibly ventilated into the cooling gaps 53, directly and efficiently cools the battery cell 1 external cases. This structure has the characteristic that battery cells 1 can be efficiently cooled while effectively preventing battery cell 1 thermal run-away.

A battery stack 10B has endplates 54 provided at both ends, and binding bars 55 are connected to the pair of endplates 54 to hold the stack of battery cells 1 and separators 52 in a sandwiched manner. The endplates 54 are made with a rectangular outline that is approximately the same as the battery cell 1 outline. As shown in Fig. 25, the binding bars 55 have inward bent regions 55A at both ends attached via set-screws 56 to the endplates 54.

Each endplate in Fig. 25 has an endplate body 54A that is reinforced by a metal plate 54B stacked on the outer side. The endplate body 54A is made of plastic or metal. The endplate can also be made entirely of metal or entirely of plastic. Each endplate in the figure is provided with screw-holes 54a through the four corners of the outside of the metal plate 54B. Binding bars 55 are attached to the endplates 54 by screwing set-screws 56 passed through the binding bar 55 bent regions 55A into the screw-holes 54a. The set-screws 56 screw into nuts (not illustrated) mounted on the inside surface of the metal plate 54B or on the inside surface of the endplate body 54A to attach the binding bars 55 to the endplates 54.

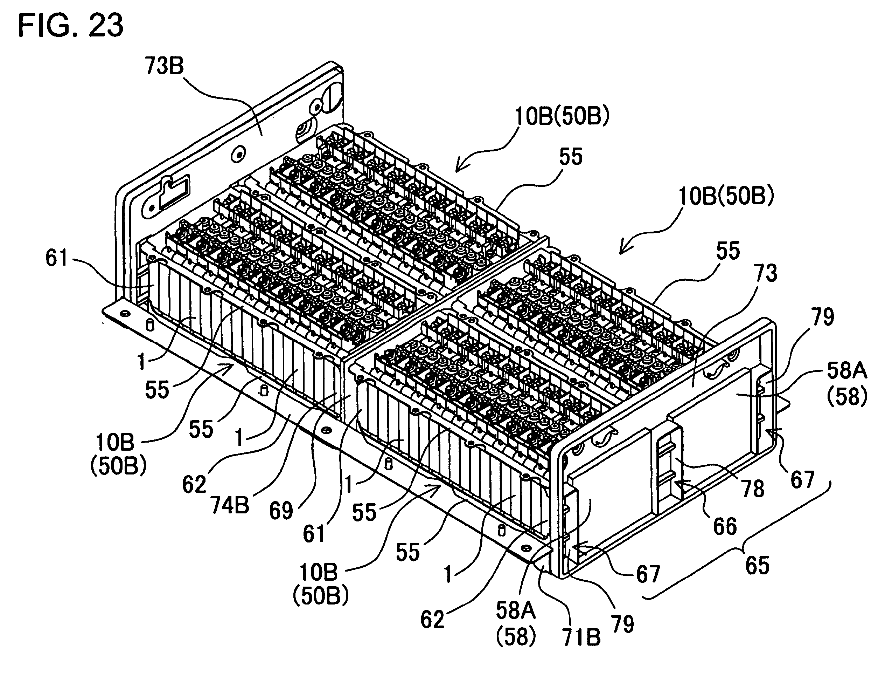

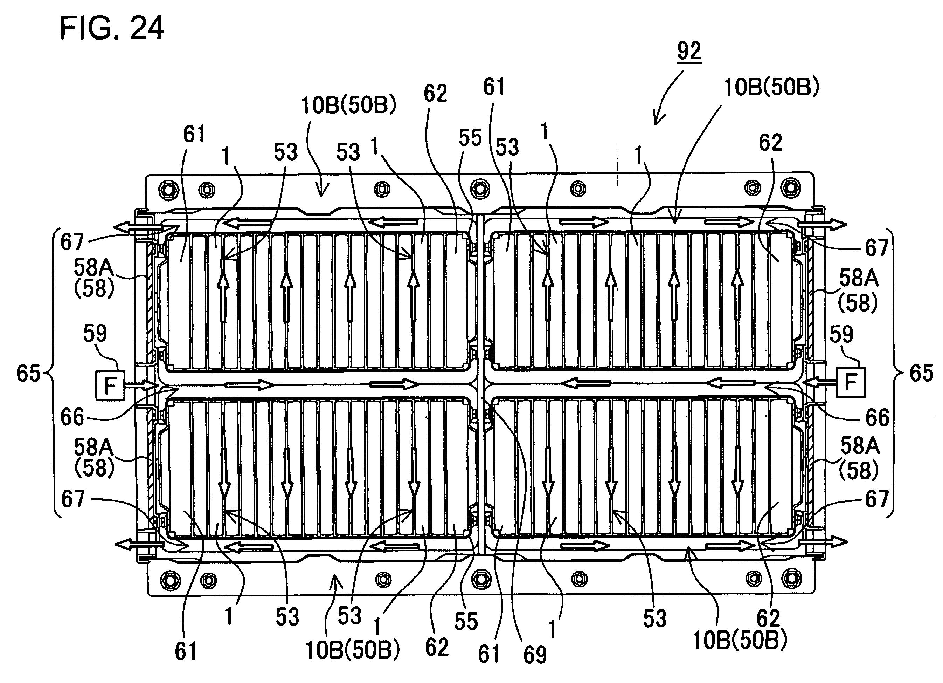

The outer case 70B houses battery blocks 50B (also referred to as battery stacks 10B in this second embodiment) that are mounted in fixed positions. The power source apparatus of Figs. 23 and 24 has battery blocks 50B disposed in two separated rows and ventilating ducts 65 are established between and on the outside of the two rows of battery blocks 50B. The ventilating ducts 65 shown in the figures are made up of center ducts 66 between the two rows of battery blocks 50B and outer ducts 67 disposed outside the two separated rows of battery blocks 50B. The center ducts 66 and outer ducts 67 are connected by the plurality of cooling gaps 53 disposed in parallel orientation between the ducts. The power source apparatus of Figs. 23 and 24 is made up of four battery blocks 50B arranged in a two row by two column array. The two rows, which each have two columns, are arranged in parallel orientation with the center ducts 66 in the middle and the outer ducts 67 on the outside. The two rows of parallel disposed battery blocks 50B are separated into two columns. Specifically, a central dividing wall 69 is disposed between the two battery blocks 50B in each row, and that central dividing wall 69 cuts-off the ventilating ducts 65 disposed between and on the outside of the two battery block 50B rows. Accordingly, as shown in Figs. 21 and 24, cooling gas is supplied separately to each column of battery blocks 50B from the two ends of the power source apparatus outer case 70B, and cooling gas that has passed through the cooling gaps 53 is discharged separately from the two ends of the outer case 70B. In the power source apparatus of the figures, battery cells 1 in the two columns of battery blocks 50B are cooled by ventilation that forces the cooling gas to flow in opposite directions through the center duct 66 and outer ducts 67 of each column.

As shown by the arrows in Figs. 21 and 24, the forced ventilating equipment 59 of this power source apparatus forces cooling gas to flow from the center ducts 66 to the outer ducts 67. Although not illustrated, cooling gas could also be forced to flow from the outer ducts 67 to the center ducts 66. In forced ventilation from the center ducts 66 to the outer ducts 67, cooling gas flowing from the center ducts 66 divides and flows through each cooling gap 53 to cool the battery cells 1. Cooling gas, which has cooled the battery cells 1, collects in the outer ducts 67 and is discharged. In forced ventilation from the outer ducts 67 to the center ducts 66, cooling gas flowing from the outer ducts 67 divides and flows through each cooling gap 53 to cool the battery cells 1. Cooling gas, which has cooled the battery cells 1, collects in the center ducts 66 and is discharged.

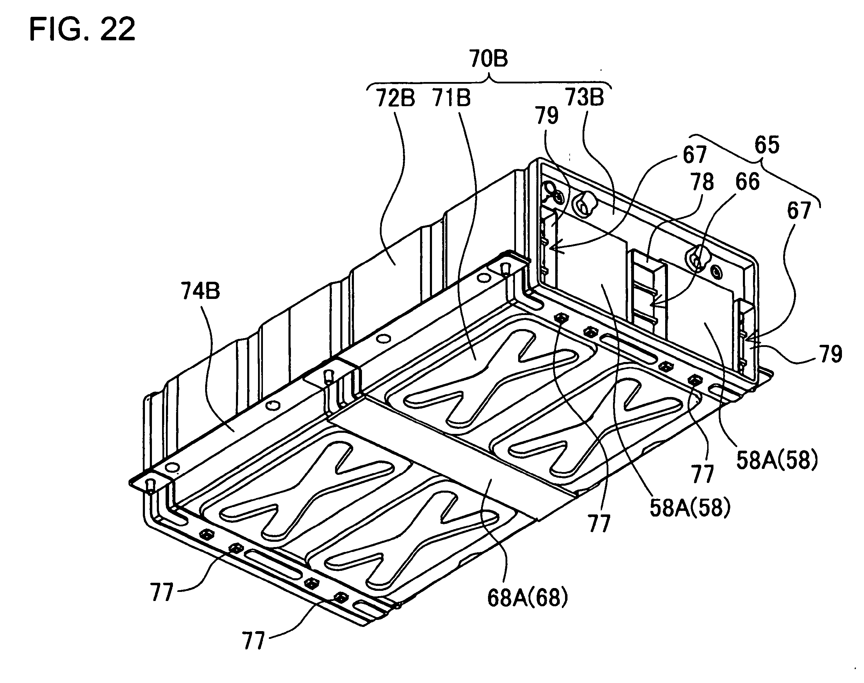

The outer case 70B shown in Figs. 21 and 22 is provided with a lower case 71 B, an upper case 72B, and end-panels 73B connected at both ends. The upper case 72B and the lower case 71 B have outward projecting flanges 74B and those flanges 74B are connected via nuts and bolts. In the outer case 70B of the figures, the flanges 74B are disposed on the side surfaces of the outer case 70B. The endplates 54 of the battery blocks 50B contained inside the outer case 70B are attached to the lower case 71 B via set-screws to hold the battery blocks 50B in fixed positions. Set-screws 77 are passed through the lower case 71 B and screwed into screw-holes (not illustrated) in the endplates 54 to mount the battery blocks 50B in the outer case 70B.

The end-panels 73B are connected to both ends of the upper case 71 B and lower case 71 B to close-off the outer case 70B. Each end-panel 73B is provided with an outward protruding connecting duct 78 that connects with the center duct 66, and outward protruding connecting ducts 79 that connect with the outer ducts 67. These connecting ducts 78, 79 are connected to the forced ventilating equipment 59 and exhaust ducts (not illustrated) that exhaust power source apparatus cooling gas to the outside. These end-panels 73B are connected to the ends of the battery blocks 50B by screw-attachment. However, the end-panels can also be attached to the battery blocks or to the outer case by a fastening configuration other than screw-attachment.

The power source apparatus shown in the figures is provided with second insulating layers 58, 68 on parts of the outer case 70B to reduce temperature differences between the battery cells 1 housed inside. In each battery stack 10B, which has a plurality of stacked battery cells 1, battery cells 1 in the center region easily become a high temperature, and battery cells 1 in the end regions easily become a lower temperature. In particular, battery cells disposed at both ends of a battery stack 10B effectively radiate heat through the endplates 54 and easily become a lower temperature. Therefore, by providing second insulating layers 58, 68 in regions corresponding to the ends of each battery stack 10B, temperature drop in the end region battery cells 1 that are normally efficiently cooled on one side can be effectively prevented and battery cell 1 temperature differences can be reduced.

The outer case 70B of Figs. 21-24 is provided with second insulating layers 58, 68 in locations corresponding to the ends of the battery blocks 50B. The power source apparatus of the figures has four battery blocks 50B. Two battery blocks 50B are aligned in a straight-line row, and two rows of two battery blocks 50B are arranged in parallel disposition and held inside the outer case 70B. The outer case 70B of the figures is provided with second insulating layers 58 at both ends of the two rows of battery blocks 50B, and with second insulating layers 68 at locations corresponding to the center sections of the two straight-line rows of battery blocks 50B.

The outer case 70B of Figs. 21-24 is provided with second insulating layers 58 on the outer surfaces of the end-panels 73B, which correspond to the outsides of the ends of the battery blocks 50B disposed in straight-line rows. The outer case 70B shown in the figures has flat-plate thermal insulating material 58A attached to the outer surfaces of the end-panels 73B to establish the second insulating layers 58. The end-panels 73B shown in the figures have thermal insulating material 58A attached between the connecting ducts 78, 79 to establish the second insulating layers 58. The second insulating layers 58 provided on the end-panels 73B suppress efficient radiative cooling from the outsides of the ends of the battery blocks 50B disposed inside the end-panels 73B. This effectively prevents temperature drop in the battery cells 1 in those regions and reduces battery cell 1 temperature differences.

The outer case 70B of Fig. 22 is provided with a second insulating layer 68 on the bottom surface of the lower case 71 B in a location corresponding to the interior disposed ends of the battery blocks 50B arranged in straight-line rows, which is the center section of the straight-line rows. The outer case 70B shown in the figures has a band of thermal insulating material 68A attached at the center of the bottom surface of the lower case 71 B to establish a second insulating layer 68. The band of thermal insulating material 68A is attached opposite the endplates 54 of battery blocks 50B held inside the outer case 70B. The second insulating layer 68 disposed at the center of the bottom surface of the lower case 71 B suppresses efficient radiative cooling from the outsides of the ends of the battery blocks 50B disposed inside the center of lower case 71 B. This effectively prevents temperature drop in the battery cells 1 in those regions and reduces battery cell 1 temperature differences. Although the outer case shown in the figures has a second insulating layer disposed on the bottom surface of the lower case, the second insulating layer can also extend along the side surfaces of the lower case and second insulating layer can also be provided on the upper case.

The outer case 70B described above is provided with second insulating layers 58, 68 on outer surface locations corresponding to the ends of the battery blocks 50B. This structure can easily establish second insulating layers 58, 68 by attaching thermal insulating material 58A, 68A to the outside surfaces of the outer case 70B. However, second insulating layers can also be established on the inside surfaces of the outer case opposite the ends of the battery blocks. In this type of outer case, thermal insulating material can be attached to the inside surfaces of the end-panels and the lower and/or upper cases to establish second insulating layers. This configuration has the characteristic that the second insulating layers can be put in direct contact with the ends of the battery blocks for even more efficient thermal insulation.

The power source apparatus described above has two separate rows of two battery blocks 50B for an overall two row two column array. However, the power source apparatus can also be configured as two rows with one battery block in each row for an overall two row one column array. In this power source apparatus, ventilating ducts made up of a center duct and outer ducts can cool the battery cells by forced ventilation flowing in opposite directions through the center duct and outer ducts, or by forced ventilation flowing in the same direction in all ducts. Further, four battery blocks arranged in a two row by two column array can also be disposed without a central dividing wall between the two battery blocks in each row or between the two center ducts. Here, the two battery blocks in each row can be joined in a straight-line, the two rows can be disposed in parallel orientation, and ventilating ducts can be established between and on the outside of the two rows of battery blocks. In this power source apparatus, forced ventilation can be supplied to either the center duct between the two rows of battery blocks or the outer ducts on the outside to force flow through the cooling gaps. Flow supplied to either the center duct or the outer ducts is discharged from the opposite duct(s). In this power source apparatus as well, the battery cells can be cooled by forced ventilation flowing in opposite directions through the center duct and outer ducts, or by forced ventilation flowing in the same direction in all ducts.

The area of a ventilating duct 65 disposed between two parallel rows of battery blocks 50B is made twice the area of each ventilating duct disposed outside the two rows of battery blocks 50B. This is because forced ventilation in a center duct 66 between the two rows of battery blocks 50B divides into two parts to flow to the outer ducts 67 on both sides. Or, forced ventilation in the two outer ducts 67 flows to, and collects in a center duct for discharge. Specifically for the power source apparatus shown in Fig. 24, since the center ducts 66 transport twice the cooling gas of the outer ducts 67, the cross-sectional area of the center ducts 66 is made twice that of the outer ducts 67 to reduce pressure losses. In the power source apparatus of Fig. 24, the width of the center ducts 66 is made twice that of the outer ducts 67 to increase the cross-sectional area of the center ducts 66

In the power source apparatus described above, battery blocks 50B are disposed in two parallel rows and ventilating ducts 65 are established between, and on the outside of the two rows of battery blocks 50B. However, the power source apparatus can also be configured with a single row of battery blocks. Although not illustrated, this power source apparatus can be provided with ventilating ducts on both sides of the single row of battery blocks. Cooling gas can be forcibly ventilated from the ventilating duct on one side to the ventilating duct on the other side to pass cooling gas through each cooling gap and cool the battery cells. In this power source apparatus, since equal amounts of cooling gas flow through the ventilating ducts on both sides of the battery blocks, each ventilating duct can be made with an equal cross-sectional area, namely with an equal width. In this power source apparatus as well, battery cells can be cooled by forced ventilation that flows in the opposite directions through the ventilating ducts on each side of the battery blocks, or that flows in the same direction through the ventilating ducts.

To reduce temperature differences between the battery cells 1 in the embodiments described above, a first insulating layer 8 is provided on the cooling plate 7 of the power source apparatus 91 of the first embodiment, and second insulating layers 58, 68 are provided on the outer case 70B of the power source apparatus 92 of the second embodiment. However, in the power source apparatus of the present invention, a first insulating layer can be provided on the cooling plate in addition to second insulating layers provided on parts of the outer case to further reduce temperature differences between the battery cells.

### (Third Embodiment)

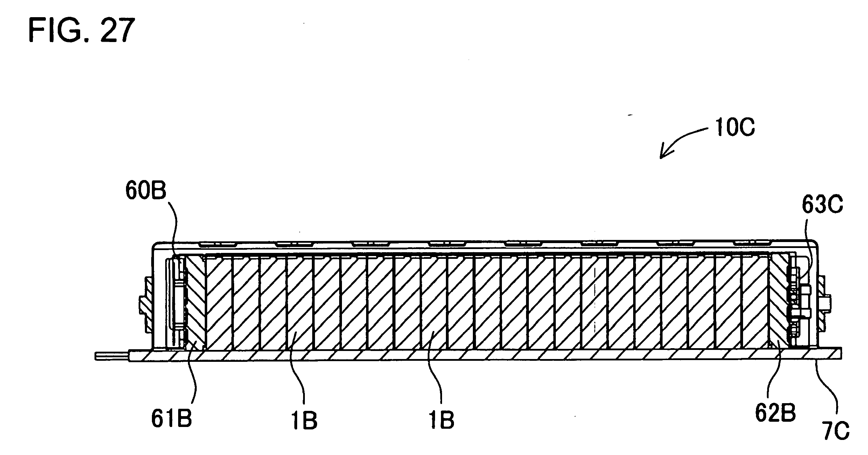

Although rectangular batteries having box-shaped or flat-plate-shaped external cases were used as the battery cells 1 in the examples above, the power source apparatus is not limited to that configuration and circular cylindrical battery cells can also be used. As a third embodiment, Fig. 27 shows an example of a battery block using circular cylindrical battery cells 1 B. As shown in this figure, circular cylindrical batteries are connected in an upright standing orientation to form a battery stack 10C that is disposed on top of a cooling plate 7C. A block circuit board 60B is disposed at one end of the battery stack 10C, and an electrical component holder 62B that holds electrical components 63C is disposed at the other end. In this structure as well, there is no need for a special-purpose electrical component case and electrical components for controlling the battery block are disposed in each battery block. Consequently, this structure has the positive feature that the overall system can be simplified. Although the circular cylindrical battery cells 1 B in the example of Fig. 27 have an upright standing orientation, it should be clear that the same results can be obtained from battery cells arranged lying sideways.

### (Power Source Apparatus Used for Power Storage)

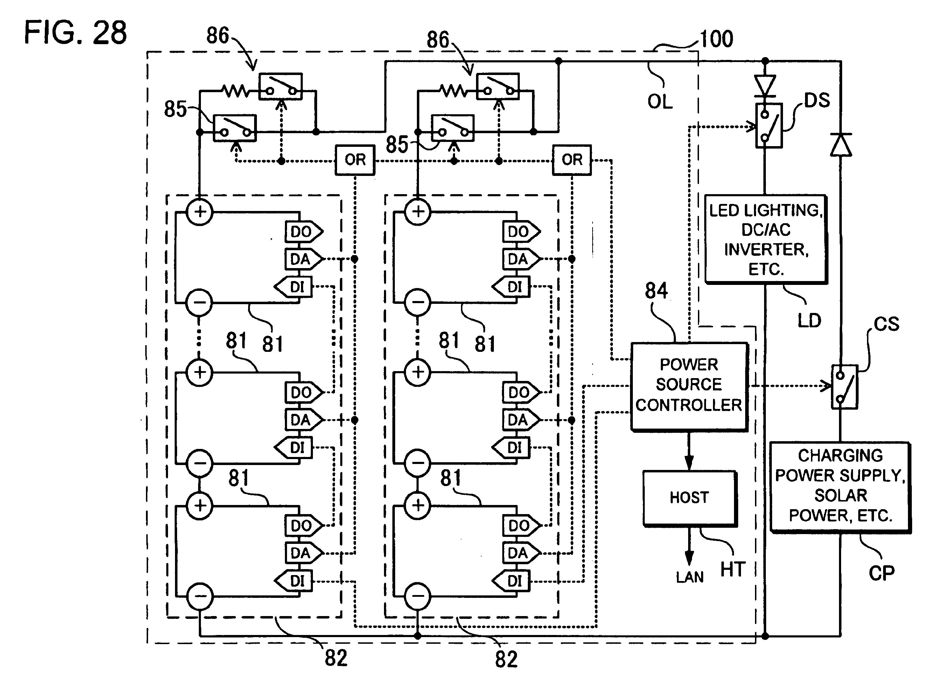

The power source apparatus can be used not only as the power source in mobile systems (including vehicles), but also as an on-board (mobile) power storage resource. For example, it can be used as a power source system in the home or manufacturing facility that is charged by solar power or late-night (reduced-rate) power and discharged as required. It can also be used for applications such as a streetlight power source that is charged during the day by solar power and discharged at night, or as a backup power source to operate traffic signals during power outage. An example of a power source apparatus for these types of applications is shown in Fig. 28. The power source apparatus 100 shown in this figure has a plurality of battery packs 81 connected to form battery units 82. Each battery pack 81 has a plurality of battery cells connected in series and/or parallel. Each battery pack 81 is controlled by a power source controller 84. After charging the battery units 82 with a charging power supply CP, the power source apparatus 100 drives a load LD. Accordingly, the power source apparatus 100 has a charging mode and a discharging mode. The load LD and the charging power supply CP are connected to the power source apparatus 100 through a discharge switch DS and a charging switch CS respectively. The discharge switch DS and the charging switch CS are controlled ON and OFF by the power source apparatus 100 power source controller 84. In the charging mode, the power source controller 84 switches the charging switch CS ON and the discharge switch DS OFF to allow the power source apparatus 100 to be charged from the charging power supply CP. When charging is completed by fully-charging the batteries or by charging to a battery capacity at or above a given capacity, the power source apparatus can be switched to the discharging mode depending on demand by the load LD. In the discharging mode, the power source controller 84 switches the charging switch CS OFF and the discharge switch DS ON to allow discharge from the power source apparatus 100 to the load LD. Further, depending on requirements, both the charging switch CS and the discharge switch DS can be turned ON to allow power to be simultaneous supplied to the load LD while charging the power source apparatus 100.

The load LD driven by the power source apparatus 100 is connected through the discharge switch DS. In the discharging mode, the power source controller 84 switches the discharge switch DS ON to connect and drive the load LD with power from the power source apparatus 100. A switching device such as a field effect transistor (FET) can be used as the discharge switch DS. The discharge switch DS is controlled ON and OFF by the power source apparatus 100 power source controller 84. In addition, the power source controller 84 is provided with a communication interface to communicate with externally connected equipment. In the example of Fig. 28, the power source controller 84 is connected to an external host computer HT and communicates via known protocols such as universal asynchronous receiver transmitter (UART) and recommended standard-232 (RS-232C) protocols. Further, depending on requirements, a user interface can also be provided to allow direct user operation.

This power source apparatus 100 is also has an equalization mode to equalize the battery units 82. Battery units 82 are connected in parallel through parallel connection switches 85 that connect the battery units 82 to an output line OL. Accordingly, equalization circuits 86 are provided that are controlled by the power source controller 84. Remaining battery capacity variation among the plurality of battery units 82 can be suppressed by operating the equalization circuits 86

The car power source apparatus of the present invention is appropriately used as a power source apparatus for applications such as a plug-in hybrid car that can switch between an electric vehicle (EV) operating mode and a hybrid electric vehicle (HEV) operating mode, a hybrid electric vehicle, or an electric vehicle.

## Claims

1. A power source apparatus comprising:
a plurality of battery cells (1) being stacked in a stacking direction into battery stacks (10), each of the battery cells (1) being formed in rectangular shape;
battery blocks (50) made up of the plurality of battery cells (1) connected in the battery stacks (10); and
an outer case that holds the battery blocks (50), wherein
each of the battery stacks (10) comprises a pair of endplates (4) being made up of a first endplate (4A) and a second endplate (4B), said endplates (4) being disposed at both ends of the battery stack (10) in the stacking direction of the battery cells (1), the battery stack (10) being held sandwiched between the pair of endplates (4),
**characterized in that**
a block circuit board (60) is disposed at the first endplate (4A) at one end of the battery stack (10), the block circuit board (60) being arranged to control the battery cells (1), and
electrical components (63) are disposed at the second endplate (4B) at the other end of the battery stack (10), the electrical components (63) being electrically connected to the block circuit board (60) or the battery stack (10).

2. The power source apparatus as cited in claim 1, wherein a circuit board holder (61) to retain the block circuit board (60), and an electrical component holder (62) to retain the electrical components (63) are provided; and the circuit board holder (61) and the electrical component holder (62) are mounted in the end-planes of a battery stack (10) in an orientation approximately parallel to the battery cells.

3. The power source apparatus as cited in claim 1 or claim 2, wherein the block circuit board (60) in a battery stack (10) is provided with a voltage detection circuit to detect the voltage between the terminals of each battery cell; and flexible printed circuits (12) are used as the voltage detection lines for electrical connection between the voltage detection circuit and the electrode terminals of each battery cell (1).

4. The power source apparatus as cited in any one of the claims 1-3, wherein a cooled configuration is established by providing a cooling plate (7) with coolant plumbing for each battery block (50), and each battery stack (10) is disposed on a cooling plate (7).

5. The power source apparatus as cited in the claims 2, wherein the electrical component holder (62) comprises a lead-plate (64) in a space established thereby.

6. The power source apparatus as cited in the claim 5, wherein the electrical component holder (62) further disposes the electrical components (63) in the space, and the electrical components (63) are connected to the lead-plate (64).

7. The power source apparatus as cited in any one of the claims 1-6 wherein the endplates (4) are disposed at both said ends of the battery stack (10) other than an upper surface on which electrode terminals of the battery cells (1) are provided.

## Patentansprüche

1. Stromquellenvorrichtung, umfassend:
eine Vielzahl von Batteriezellen (1), die in einer Stapelrichtung in Batteriestapeln (10) gestapelt sind, wobei jede der Batteriezellen (1) mit einer rechteckigen Form gebildet ist;
Batterieblöcke (50), die aus der Vielzahl von Batteriezellen (1) hergestellt sind, die in den Batteriestapeln (10) verbunden sind; und
ein äußeres Gehäuse, das die Batterieblöcke (50) hält, wobei jeder der Batteriestapel (10) ein Paar von Endplatten (4) umfasst, das aus einer ersten Endplatte (4A) und einer zweiten Endplatte (4B) hergestellt ist, wobei die Endplatten (4) an beiden Enden des Batteriestapels (10) in der Stapelrichtung der Batteriezellen (1) angeordnet sind, wobei der Batteriestapel (10) eingelegt zwischen dem Paar von Endplatten (4) gehalten wird,
**dadurch gekennzeichnet, dass**
eine Blockschaltungskarte (60) an der ersten Endplatte (4A) an einem Ende des Batteriestapels (10) angeordnet ist, wobei die Blockschaltungskarte (60) angeordnet ist, um die Batteriezellen (1) zu steuern, und
elektronische Komponenten (63) an der zweiten Endplatte (4B) an dem anderen Ende des Batteriestapels (10) angeordnet sind, wobei die elektrischen Komponenten (63) elektrisch mit der Blockschaltungskarte (60) oder dem Batteriestapel (10) verbunden sind.

2. Stromquellenvorrichtung gemäß Anspruch 1, wobei ein Schaltungskartenhalter (61), um die Blockschaltungskarte (60) zu sichern, und ein Elektrische-Komponenten-Halter (62), um die elektrischen Komponenten (63) zu sichern, vorgesehen sind; und der Schaltungskartenhalter (61) und der Elektrische-Komponenten-Halter (62) in den Endebenen eines Batteriestapels (10) in einer Orientierung ungefähr parallel zu den Batteriezellen montiert sind.

3. Stromquellenvorrichtung gemäß Anspruch 1 oder 2, wobei die Blockschaltungskarte (60) in einem Batteriestapel (10) mit einer Spannungserfassungsschaltung versehen ist, um die Spannung zwischen den Anschlüssen von jeder Batteriezelle zu erfassen; und flexible gedruckte Schaltungen (12) als die Spannungserfassungsleitungen für eine elektrische Verbindung zwischen der Spannungserfassungsschaltung und den Elektrodenanschlüssen von jeder Batteriezelle (1) verwendet werden.

4. Stromquellenvorrichtung gemäß einem der Ansprüche 1 bis 3, wobei eine gekühlte Konfiguration eingerichtet ist, indem eine Kühlplatte (7) mit einer Kühlmittelinstallation für jeden Batterieblock (50) vorgesehen ist, und jeder Batteriestapel (10) auf einer Kühlplatte (7) angeordnet ist.

5. Stromquellenvorrichtung gemäß Anspruch 2, wobei der Elektrische-Komponenten-Halter (62) eine Anschlussplatte (64) in einem dadurch gebildeten Raum umfasst.

6. Stromquellenvorrichtung gemäß Anspruch 5, wobei der Elektrische-Komponenten-Halter (63) ferner die elektrischen Komponenten (63) in dem Raum anordnet, und die elektrischen Komponenten (63) mit der Anschlussplatte (64) verbunden sind.

7. Stromquellenvorrichtung gemäß einem der Ansprüche 1 bis 6, wobei die Endplatten (4) an den beiden Enden des Batteriestapels (10), abweichend von einer oberen Oberfläche, auf der Elektrodenanschlüsse der Batteriezellen (1) vorgesehen sind, angeordnet sind.

## Revendications

1. Appareil de source d'alimentation comprenant :
une pluralité de cellules de batteries (1) empilées dans une direction d'empilage dans des empilements de batteries (10), chacune des cellules de batteries (1) étant de forme rectangulaire ;
des blocs-batteries (50) constitués de la pluralité de cellules de batteries (1) reliées dans les empilements de batteries (10) ; et
une enveloppe extérieure qui maintient les blocs-batteries (50), dans lequel
chacun des empilements de batteries (10) comprend une paire de plaques d'extrémité (4) constituée d'une première plaque d'extrémité (4A) et d'une deuxième plaque d'extrémité (4B), lesdites plaques d'extrémité (4) étant disposées aux deux extrémités de l'empilement de batteries (10) dans la direction d'empilage des cellules de batteries (1), l'empilement de batteries (10) étant pris en sandwich entre la paire de plaques d'extrémité (4),
**caractérisé en ce que**
une carte de circuit de bloc (60) est disposée au niveau de la première plaque d'extrémité (4A) à une extrémité de l'empilement de batteries (10), la carte de circuit de bloc (60) étant agencée pour commander les cellules de batteries (1), et
des composants électriques (63) sont disposés au niveau de la deuxième plaque d'extrémité (4B) à l'autre extrémité de l'empilement de batteries (10), les composants électriques (63) étant reliés électriquement à la carte de circuit de bloc (60) ou à l'empilement de batteries (10).

2. Appareil de source d'alimentation selon la revendication 1, dans lequel un support de carte de circuit (61) pour maintenir la carte de circuit de bloc (60), et un support de composants électriques (62) pour maintenir les composants électriques (63) sont fournis ; et le support de carte de circuit (61) et le support de composants électriques (62) sont montés dans les plans d'extrémité d'un empilement de batteries (10) dans une orientation approximativement parallèle aux cellules de batteries.

3. Appareil de source d'alimentation selon la revendication 1 ou la revendication 2, dans lequel la carte de circuit de bloc (60) dans un empilement de batteries (10) est pourvue d'un circuit de détection de tension pour détecter la tension entre les bornes de chaque cellule de batterie ; et des circuits imprimés flexibles (12) sont utilisés en tant que lignes de détection de tension pour une liaison électrique entre le circuit de détection de tension et les bornes d'électrode de chaque cellule de batterie (1).

4. Appareil de source d'alimentation selon l'une quelconque des revendications 1 à 3, dans lequel une configuration refroidie est établie en fournissant une plaque de refroidissement (7) avec une canalisation de liquide de refroidissement pour chaque bloc-batteries (50), et chaque empilement de batteries (10) est disposé sur une plaque de refroidissement (7).

5. Appareil de source d'alimentation selon la revendication 2, dans lequel le support de composants électriques (62) comprend une plaque conductrice (64) dans un espace établi par cela.

6. Appareil de source d'alimentation selon la revendication 5, dans lequel le support de composants électriques (62) dispose en outre les composants électriques (63) dans l'espace, et les composants électriques (63) sont reliés à la plaque conductrice (64).

7. Appareil de source d'alimentation selon l'une quelconque des revendications 1 à 6, dans lequel les plaques d'extrémité (4) sont disposées aux dites deux extrémités de l'empilement de batteries (10) en dehors d'une surface supérieure sur laquelle des bornes d'électrode des cellules de batteries (1) sont fournies.
